# EUROPEAN PATENT SPECIFICATION

(11) **EP 3 640 080 B1**
(45) Date of publication and mention of the grant of the patent: **24.05.2023**
(21) Application number: 18835259.5
(22) Date of filing: 01.06.2018
(51) Int. Cl.: B60K 6/26, B60K 6/387, B60W 10/02, B60W 20/10, B60W 50/00, F02D 41/06, F02N 15/00, H02P 9/48, B60L 15/20, B60K 6/485, B60W 10/06, B60W 10/08, B62M 23/02, F02N 11/04, B60L 15/38, B60K 6/543

(54) **VEHICLE**
FAHRZEUG
VÉHICULE

(30) Priority: 18.07.2017 JP 2017138887
(43) Date of publication of application: 22.04.2020
(73) Proprietor: Yamaha Hatsudoki Kabushiki Kaisha, Iwata-shi, Shizuoka 438-8501 (JP)
(72) Inventor: HINO, Haruyoshi, Iwata-shi Shizuoka 438-8501 (JP); MURAYAMA, Takuji, Iwata-shi Shizuoka 438-8501 (JP); KOSUGI, Makoto, Iwata-shi Shizuoka 438-8501 (JP); MATSUMOTO, Kuniaki, Iwata-shi Shizuoka 438-8501 (JP); OBA, Tatsuhiro, Iwata-shi Shizuoka 438-8501 (JP)
(74) Representative: Zimmermann, Tankred Klaus
(86) International application number: PCT/JP2018/021150
(87) International publication number: WO 2019/017088

(56) References cited:
- EP-A1- 2 966 761
- EP-A1- 3 042 818
- EP-A2- 1 705 049
- DE-A1-102011 080 161
- DE-T2- 60 313 360
- JP-A- H10 339 185
- JP-A- 2005 106 080
- JP-A- 2005 106 080
- JP-A- 2005 192 341
- JP-A- 2005 192 341
- JP-A- 2014 167 325
- JP-A- 2014 167 325
- US-A1- 2008 035 397
- US-A1- 2011 046 831
- US-A1- 2013 192 272

## Description

### Technical Field

The present teaching relates to a vehicle.

### Background Art

Patent Literature 1 (PTL 1) shows a vehicle including an internal combustion engine as an engine, and a starter generator as a magnet type motor that transmits and receives power to and from the internal combustion engine. The single starter generator functions both as a starter for starting the internal combustion engine and as a generator for generating electricity by being driven by the internal combustion engine after starting the internal combustion engine. PTL 1 proposes a technique of using the starter generator for a purpose other than as the starter and the generator, for example, for the purpose of assisting the internal combustion engine. The starter generator according to PTL 1, for example, assists the internal combustion engine in a direction of increasing the rotation speed of the internal combustion engine in a situation where the vehicle is accelerated by a user operating an accelerator grip.

For example, Patent Literature 2 (PTL 2) shows a vehicle including an electric motor that functions also as a generator. The electric motor according to PTL 2, for example, electrically assists an engine after starting the engine when the throttle opening degree is a predetermined opening degree or more (at a time of accelerating, traveling uphill, or the like).

In the vehicles according to PTLs 1 and 2, a reduction in the fuel injection amount with an acceleration performance maintained is attempted by assisting the engine at a time of accelerating the vehicle.

The document DE102011080161A1 discloses a drive train for an electric scooter, in which the engine and the electric motor are separated by a clutch.

The document EP2966761A1 discloses a drive train for a hybrid motorcycle, in which the motor and the engine are directly, mechanically connected.

The document US2013/192272A1 discloses a drive train for a hybrid vehicle including a driving mode, in which the vehicle is driven off by the electric motor.

### Citation List

### Patent Literature

PTL 1 : Japanese Patent No. 5874314
PTL 2 : Japanese Patent Application Laid-Open No. 2015-074296

### Summary of Invention

### Technical Problem

For a vehicle including a magnet type motor, it is desired that the vehicle moves forward with an increased responsiveness to a driver's operation on an accelerator operator. Especially desired is an increase in the responsiveness at a time of departure of the vehicle.

An object of the present teaching is to enable a vehicle including a magnet type motor to move forward with an increased responsiveness to an operation on an accelerator operator, and especially with an increased responsiveness at a time of departure of the vehicle.

### Solution to Problem

The present inventors carried out detailed studies about assist from a magnet type motor in enabling a vehicle to move forward with an increased responsiveness to an operation on an accelerator operator.

Conventionally, driving with a magnet type motor is considered as an additional function auxiliary to basic driving with an engine. A vehicle including an engine and a magnet type motor, therefore, is considered to be driven mainly by the engine. Thus, a conventional vehicle assisted by a magnet type motor is designed based on an idea that: first, an engine transitions from a state where the rotation speed is low and rotation is unstable to a state where power that stabilizes the rotation can be outputted; and then the magnet type motor additionally works, which means that assist is given. Designing such a vehicle involves an issue about at which timing in increasing the engine rotation speed the magnet type motor starts assisting.

The design idea described above faces difficulties in enabling the vehicle to move forward with a largely increased responsiveness to an operation on an accelerator operator.

The present inventors fundamentally reviewed the design idea for a vehicle, in order to obtain a new design idea different from the conventional design idea that adopts engine driving for traveling with assist given from a magnet type motor.

In a vehicle, driven members such as wheels make the vehicle move forward based on power of a crankshaft. When viewed from the crankshaft which drives the driven members, the crankshaft can be driven by a plurality of power sources. Even though different types of power sources are used for driving, power for the crankshaft to drive the driven members does not differ in itself. For example, when the driven members are driven by power of the crankshaft, the power that drives the driven members does not differ by whether the crankshaft is rotated by an engine or by a magnet type motor. That is, the level of power for the crankshaft to drive the driven members may vary, but it makes no difference in the fact that the power is power.

The present inventors attempted to make a vehicle travel using a magnet type motor before an engine starts a combustion action at a time of vehicle departure.

The motor has a property that the lower its rotation speed is, the lower an induced voltage is, which hinders reception of electricity. Thus, the motor has a property that the lower its rotation speed is, the more power the motor outputs. The magnet type motor is, therefore, capable of outputting a higher torque in a relatively low rotation speed range as compared to a relatively high rotation speed range. Moreover, an electrical response of the magnet type motor (a change in electricity supplied to the magnet type motor) can be quicker than a mechanical response of the engine (for example, a change in the throttle opening degree). It is therefore possible to provide a more timely response to a change in the operation amount at a time of departure. This enables the vehicle to move forward with an increased responsiveness to an accelerating operation.

The present teaching is accomplished based on the findings described above, and a vehicle according to an aspect of the present teaching may employ the following configurations.
(1) In an aspect of the present teaching, a vehicle includes:
   an engine including a crankshaft, the engine being configured to output power through the crankshaft;
   a magnet type motor including a rotor and a stator, the rotor being connected to the crankshaft such that power transmission between the rotor and the crankshaft is allowed without interposition of a clutch and such that the rotor rotates with a fixed speed ratio relative to the crankshaft, the stator being arranged opposed to the rotor, either one of the rotor or the stator including a permanent magnet, the magnet type motor being configured to rotate the crankshaft at least when starting a combustion action of the engine and to generate electricity when being driven by the engine;
   an electricity storage device that supplies electricity to the magnet type motor;
   a driven member configured to be driven by power outputted from the engine and/or the magnet type motor, to make the vehicle move forward;
   an accelerator operator that receives a torque request caused by a driver operating the accelerator operator; and
   a control section configured to control the magnet type motor and the engine such that, in response to reception of the torque request caused by the driver operating the accelerator operator in a state where the combustion action of the engine is stopped and the driven member is not driven, the magnet type motor drives the driven member by causing the crankshaft to rotate using electricity in the electricity storage device with the combustion action of the engine stopped, to make the vehicle travel using the magnet type motor before the engine starts the combustion action at a time of vehicle departure, for the vehicle having a power transmission system configured to support the power transmission between the rotor and the crankshaft being not disconnected, the control section is further configured to control the magnet type motor and the engine such that, in response to reception of the torque request caused by the driver additionally or continuously operating the accelerator operator in a state where the magnet type motor drives the driven member by causing the crankshaft to rotate using electricity in the electricity storage device with the combustion action of the engine stopped, the control section is configured to supply a fuel to the engine and starts the combustion action of the engine so that the driven member is driven by the engine as well as the magnet type motor, to make the vehicle travel with the rotation of the crankshaft being quickly accelerated by both the magnet type motor and the engine.

In the vehicle of (1), power transmission between the rotor and the crankshaft is performed without interposition of a clutch such that the rotor rotates with a fixed speed ratio relative to the crankshaft. Thus, the power transmission between the rotor and the crankshaft is not disconnected. The vehicle of (1) is assumed to have such a power transmission system.

The vehicle of (1) includes the control section configured to control the magnet type motor and the engine. The control section is configured such that, if a torque request caused by the driver operating the accelerator operator is received in a state where the combustion action of the engine is stopped and the driven member is not driven, the magnet type motor drives the driven member by causing the crankshaft to rotate using electricity in the electricity storage device with the combustion action of the engine stopped, to make the vehicle travel. The crankshaft is rotated with the fixed speed ratio relative to the rotor of the magnet type motor.

In the magnet type motor, the lower the rotation speed is, the lower an induced voltage is, which hinders reception of electricity from the electricity storage device. Accordingly, in a state where the crankshaft is stopped and in a state after the crankshaft starts rotating, the magnet type motor is likely to receive a large amount of electricity from the electricity storage device. This enables the magnet type motor to rotate the crankshaft with large power. The rotation of the crankshaft accelerates quickly. As a result, the vehicle including the magnet type motor can move forward with an increased responsiveness to a departure operation on the accelerator operator.

In the vehicle of (1), by the time the combustion action of the engine is started, the magnet type motor has already driven the crankshaft and the vehicle is traveling. This can reduce a load that is applied to the crankshaft at a time when the combustion action of the engine is started. Accordingly, if an additional or continuous torque request is received, the rotation of the crankshaft can be quickly accelerated by the magnet type motor and the engine. As a result, the vehicle including the magnet type motor has an increased responsiveness to a departure operation on the accelerator operator.

### Advantageous Effects of Invention

The present teaching can provide a vehicle including a magnet type motor, the vehicle being capable of moving forward with an increased responsiveness to a departure operation.

The terminology used herein is for defining particular embodiments only and is not intended to be limiting the teaching.

As used herein, the term "and/or" includes any and all combinations of one or more of the associated listed items.

As used herein, the terms "including", "comprising", or "having", and variations thereof specify the presence of stated features, steps, operations, elements, components, and/or equivalents thereof, and can include one or more of steps, operations, elements, components, and/or their groups.

As used herein, the terms "attached", "connected", "coupled", and/or equivalents thereof are used in a broad sense, and include both of direct and indirect attachment, connection, and coupling. In addition, the terms "connected" and "coupled" can mean not only physical or mechanical connection or coupling but also direct or indirect electrical connection or coupling.

Unless otherwise defined, all terms (including technical and scientific terms) used herein have the same meaning as commonly understood by one of ordinary skill in the art to which the present teaching belongs.

It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein.

It will be understood that the description of the present teaching discloses the number of techniques and steps.

Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion.

Nevertheless, Description and Claims should be read with the understanding that such combinations are entirely within the scope of the present teaching and the claims.

This Description describes a novel vehicle.

In the description given below, for the purposes of explanation, numerous specific details are set forth in order to provide a thorough understanding of the present teaching.

It will be apparent, however, that those skilled in the art may practice the present teaching without these specific details.

The present disclosure is to be considered as an exemplification of the present teaching, and is not intended to limit the present teaching to the specific embodiments illustrated by drawings or descriptions below.

The vehicle is a transport system. The vehicle is a manned vehicle, or an unmanned transport system. The vehicle is, for example, a wheeled vehicle. The vehicle is, for example, a straddled vehicle. The vehicle is, for example, a motorcycle. Non-limiting examples of the motorcycle include scooter, moped, off-road, and on-road type motorcycles. The straddled vehicle is not limited to motorcycles, but may be, for example, an ATV (All Terrain Vehicle) or the like. The vehicle is not limited to straddled vehicles, but may be, for example, a four-wheel vehicle having a cabin. The vehicle of the present teaching is not limited to wheeled vehicles, but may be, for example, a vessel with a screw propeller. The vehicle may be a golf cart. The vehicle may be a crawler type snowmobile. The vehicle may be a snowplow.

Preferably, the vehicle satisfies at least one of the following three requirements that:
(i) the vehicle is capable of leaning into turns;
(ii) the vehicle is configured such that operations of the engine and/or the magnet type motor are controlled so as to change the rotation speed of the crankshaft in accordance with the amount of driver's operation on the accelerator operator, and such that whether power transmission between the crankshaft and the driven member is allowed or disconnected is switched in accordance with the rotation speed of the crankshaft; and
(iii) the vehicle is configured such that power transmission between the crankshaft and the driven member is disconnected when the rotation speed of the crankshaft is in a low-speed region, while the power transmission is allowed when the rotation speed of the crankshaft is out of the low-speed region.

The lower limit value of the low-speed region is 0 rpm. The upper limit value of the low-speed region is not particularly limited, and for example, may be either higher or lower than an idling rotation speed.

Regarding (i) above, when the vehicle capable of leaning into turns takes a turn, the vehicle leans toward the inside of a curve in order to oppose a centrifugal force acting on the vehicle at a time of the turn. Examples of the vehicle capable of leaning into turns include a straddled vehicle (for example, a motorcycle, a motor tricycle) capable of leaning into turns. Regarding (ii) above, the vehicle that satisfies (ii) above is configured such that the rotation speed of the crankshaft (that is, operations of the engine and/or the magnet type motor) and switching of whether power transmission between the crankshaft and the driven member is allowed or disconnected are controlled in accordance with an operation on the accelerator operator. Regarding (iii) above, the vehicle that satisfies (iii) above can be walked and towed. The vehicle that satisfies at least one of (i) to (iii) above encompasses: a vehicle that satisfies one of (i) to (iii) above; a vehicle that satisfies (i) and (ii) above; a vehicle that satisfies (ii) and (iii) above; a vehicle that satisfies (i) and (iii) above; and a vehicle that satisfies all of (i), (ii), and (iii) above.

In the vehicle that satisfies at least one of (i) to (iii) above (especially the vehicle that satisfies at least (i) above), an agility is required, and therefore an acceleration performance at a time of departure normally tends to be highly valued. The acceleration performance at a time of departure is largely affected by clutch setting and especially by clutch stall setting. The acceleration performance as used herein is related to time or speed for traveling a certain distance (for example, several tens of meters), and is different from a forward-movement responsiveness to a departure operation as used herein. The responsiveness as used herein is what we call a start-up smoothness, and is related to the shortness of time from when a departure operation is received to when the vehicle departs. The responsiveness as used herein is related to the shortness of time taken for vehicle behaviors to change in accordance with a change in the amount of operation at a time of departure. A high responsiveness to a departure operation contributes to a control stability at a time of departure.

Examples of the engine include a single cylinder engine and an engine with two or more cylinders. Preferably, the engine is a four-stroke engine having a high-load region and a low-load region during four strokes, for example. The four-stroke engine having a high-load region and a low-load region during four strokes is, for example, a single cylinder engine, a two-cylinder engine, a three-cylinder engine of unequal interval explosion type, or a four cylinder engine of unequal interval explosion type. The four-stroke engine having a high-load region and a low-load region during four strokes has a lower rotation stability at a low rotation speed, as compared to other types of engines. Thus, reducing the rotation speed of connection has been difficult. The vehicle according to some aspects of the present teaching is, even though it includes a four-stroke engine having a high-load region and a low-load region during four strokes, likely to move forward with an increased responsiveness to an accelerating operation. The engine, however, may be a four-stroke engine not having a high-load region and a low-load region during four strokes, for example.

The combustion action of the engine is an engine action during an engine combustion. For example, a state where the crankshaft is rotated by the motor while no combustion is performed in an engine combustion step does not correspond to the combustion action of the engine. The combustion action of the engine is started after the crankshaft starts rotating and a fuel is supplied, that is, started when a mixed gas in the engine which means a supplied fuel-air mixture is initially combusted. Thus, a timing of starting the combustion action of the engine is when a mixed gas in the engine is initially combusted after the crankshaft starts rotating and a fuel is supplied.

The magnet type motor includes a rotor and a stator. Either one of the rotor or the stator includes a permanent magnet. The other includes a coil. A brushed DC motor is an example of a magnet type motor with a permanent magnet included in a stator. A brushless motor is an example of a magnet type motor with a permanent magnet included in a rotor. The number of phases of the brushless motor is not particularly limited. It may have a single phase or three phases. The magnet type motor functions as a motor to rotate the crankshaft at a time of starting the combustion action of the engine. The magnet type motor may be configured to function as a generator to generate electricity while being driven by the engine. The vehicle may include a generator in addition to the magnet type motor. The magnet type motor may be either of radial gap type or of axial gap type. The magnet type motor of radial gap type may be either of outer rotor type or of inner rotor type. The rotor is connected to the crankshaft such that power transmission between the rotor and the crankshaft is allowed without interposition of a clutch. Power transmission between the rotor and the crankshaft is not disconnected. The rotor may be directly coupled to the crankshaft, for example. The rotor may be connected to the crankshaft with a fixed speed ratio gear interposed therebetween, for example. The rotor is preferably connected to the crankshaft such that power transmission between the rotor and the crankshaft is constantly allowed.

The electricity storage device is a device that stores electricity. The electricity storage device has a capacity of supplying electricity to the magnet type motor, the capacity at least enabling the magnet type motor itself to drive the driven member by causing the crankshaft to rotate with the electricity in the electricity storage device, to make the vehicle travel. The electricity storage device is not particularly limited, and may be a battery or a capacitor, for example. The electricity storage device supplies electricity to the magnet type motor. The electricity storage device may be charged by receiving electricity generated by the magnet type motor. The number of electricity storage devices may be one, or two or more. The vehicle may include an electricity storage device in addition to the electricity storage device that supplies electricity to the magnet type motor.

The driven member according to an aspect of the present teaching is a wheel, for example. The driven member may be a screw propeller, for example. The number of driven members is not particularly limited. In a vehicle including a front wheel and a rear wheel, only the front wheel, only the rear wheel, or both the front wheel and the rear wheel may serve as the driven member.

The accelerator operator is a member that receives a torque request caused by a driver operating the accelerator operator. The accelerator operator is not particularly limited, and may be an accelerator grip, an accelerator pedal, a component constituted of a lever, or a component constituted of a button. The accelerator operator may be connected to a throttle valve included in the engine via a mechanical wire, for example. The accelerator operator may be electrically connected to a motor and a control device for driving the throttle valve, for example.

The control section has a function to control the engine and a function to control the magnet type motor. For example, in a case where the magnet type motor is a brushed DC motor, the function to control the magnet type motor is a function to switch on/off the electricity supply to the magnet type motor, for example. In a case where the magnet type motor is a brushless motor, the function to control the magnet type motor is a control on the inverter circuit for example, and more specifically is an on/off control on each of the plurality of switching parts. A hardware configuration of the control section is not particularly limited. The control section may be constituted of a computer including a central processing unit and a storage device. The control section may be partially or entirely constituted of a wired logic which is an electronic circuit. The control section as a whole may be physically configured as a single piece, or may be physically configured as a combination of different devices. For example, a device having a function to control the engine and a device having a function to control the magnet type motor may be configured as separate pieces.

Power outputted from the engine and/or the magnet type motor is transmitted to the driven member through the crankshaft. The vehicle includes a power transmission device for power transmission between the crankshaft and the driven member. The power transmission device is a concept including a transmission and a clutch. Thus, the power transmission device may or may not include a transmission. The power transmission device may or may not include a clutch. The clutch is not particularly limited, and may be a manual clutch operated by a rider's operation on the clutch or may be an automatic clutch operated not by a rider's operation on the clutch. The clutch may be a wet clutch or a dry clutch. The clutch may be a dog clutch or a friction clutch. Examples of the clutch include: an electric clutch controlled by an actuator, a motor, or the like; a hydraulic controlled clutch controlled by an oil pressure; an air-pressure controlled clutch controlled by an air pressure; and an electromagnetic clutch controlled by an electromagnetic force produced in energization of a coil or the like. Examples of the automatic clutch include a centrifugal clutch. The centrifugal clutch is a clutch that uses a centrifugal force to switch between allowing and disconnecting power transmission. The centrifugal clutch may be any of a drum type clutch, a belt type clutch (belt clutch), or a centrifugal multiple-disc clutch. The belt clutch is also called a belt clutch-in type continuously variable transmission. The belt clutch has both a function as a continuously variable transmission and a function as a clutch. The belt clutch includes a drive pulley and a driven pulley, and is configured to implement the function as a continuously variable transmission while implementing the function as a clutch by changing the interval between two sheaves included in the drive pulley. At least one sheave out of the two sheaves is disposed so as to be movable in an axial direction. The interval between the two sheaves is, for example, equal to the bottom width of a groove defined by the two sheaves. The bottom width of the groove can be equal to a first distance as its maximum value. The bottom width of the groove can be equal to a second distance as its minimum value. When the bottom width of the groove is in a range equal to or narrower than the first distance and wider than the bottom width of the belt, the belt is not pinched between the two sheaves included in the drive pulley. In this condition, almost no power transmission is performed. When the bottom width of the groove is equal to or wider than the bottom width of the belt and equal to or narrower than the second distance, the belt is pinched between the two sheaves included in the drive pulley. In this condition, power transmission is performed. The belt clutch has a simple configuration but nevertheless can implement functions as a continuously variable transmission and as a clutch. The driving-side sheave movement mechanism is configured to move at least one sheave out of the two sheaves included in the drive pulley by means of a centrifugal force caused by power outputted from the crankshaft, for example. The driving-side sheave movement mechanism may be configured to move the at least one sheave by means of an actuator instead of the centrifugal force.

The vehicle is configured such that, if a torque request caused by the driver operating the accelerator operator is received in a state where the combustion action of the engine is stopped and the driven member is not driven, the vehicle travels by motoring. The state where the combustion action of the engine is stopped and the driven member is not driven is also called a drive stop state. The motoring means that the magnet type motor uses electricity in the electricity storage device to cause the crankshaft to rotate with the combustion action of the engine stopped. In the vehicle, it may be possible that, by the time a torque request is received, the main switch has already been operated so that electricity is supplied to electrical equipment such as a control device, or it may be also possible that electricity supply to the electrical equipment is started upon reception of a torque request. The motoring is started upon or after reception of a torque request.

When power transmission between the crankshaft and the driven member is off, the motoring does not drive the driven member and thus does not make the vehicle travel. When power transmission between the crankshaft and the driven member is on, the motoring can drive the driven member and thus can make the vehicle travel. The vehicle may be configured to either allow or not allow the power transmission in a state where the combustion action of the engine is stopped and the driven member is not driven. In a case of the vehicle configured not to allow the power transmission in the state where the combustion action of the engine is stopped and the driven member is not driven, the motoring which is started in response to a torque request continues at least until the power transmission starts. Consequently, the motoring makes the vehicle travel with the combustion action of the engine stopped.

If an additional or continuous torque request is received in a state where the driven member is driven by the motoring, it is preferable that the combustion action of the engine is started in addition to the motoring. The driven member is driven by both the magnet type motor and the engine. More quick acceleration is enabled. A responsiveness at a time of departure of the vehicle can be further increased. The motoring is, for example, terminated after the combustion action of the engine is started. A timing of terminating the motoring is not particularly limited, and examples thereof include a timing when the rotation speed of the crankshaft exceeds a predetermined speed, a timing when the rotation speed of the driven member exceeds a predetermined speed, and a timing when the vehicle speed of the vehicle exceeds a predetermined speed.

Allowing and disconnecting power transmission between the crankshaft and the driven member is performed in, for example, the power transmission device. Allowing and disconnecting the power transmission may be performed either in a transmission with a neutral mechanism or in a clutch. The neutral mechanism is a mechanism capable of shifting to a neutral position. A transmission with the neutral mechanism may be either a continuously variable transmission or a stepped transmission. Examples of the continuously variable transmission with the neutral mechanism include a continuously variable transmission having two sheaves for pinching a belt with the interval therebetween being adjustable to such a distance that the belt pinching is removed by means of a centrifugal force or an electronic control. The stepped transmission with the neutral mechanism is not particularly limited, and may be a conventionally known stepped transmission. The transmission may be either an automatic transmission or a manual transmission. The clutch is as described above.

### Brief Description of Drawings

[FIG. 1] An explanatory diagram of a straddled vehicle according to a first embodiment.
[FIG. 2] A partial cross-sectional view schematically showing an overview configuration of an engine shown in FIG. 1 and therearound.
[FIG. 3] An explanatory diagram schematically showing the relationship between a crank angle position of the engine and a required torque.
[FIG. 4] A cross-sectional view showing a cross-section of a magnet type motor of FIG. 2, as taken perpendicular to the rotation axis thereof.
[FIG. 5] A block diagram schematically showing a control system of the straddled vehicle shown in FIG. 1.
[FIG. 6] A state transition diagram outlining state transitions of the straddled vehicle at a time of departure.
[FIG. 7] A state transition diagram outlining state transitions of the straddled vehicle at a time of deceleration.
[FIG. 8] An exploded perspective view schematically showing a magnet type motor included in a straddled vehicle according to a second embodiment.
[FIG. 9] A perspective view schematically showing the magnet type motor shown in FIG. 8.
[FIG. 10] A diagram schematically showing action of a stator in the magnet type motor shown in FIG. 8.
[FIG. 11] A diagram showing a principle of a rotation control on the magnet type motor shown in FIG. 8.
[FIG. 12] A partial cross-sectional view showing a belt clutch in a drive stop state.
[FIG. 13] A side view showing a drive pulley in the belt clutch shown in FIG. 12 and therearound.
[FIG. 14] A partial cross-sectional view showing the belt clutch after shifting from the drive stop state to a state (A).
[FIG. 15] A side view showing the drive pulley in the belt clutch shown in FIG. 15 and therearound.
[FIG. 16] A partial cross-sectional view showing the belt clutch at a time of acceleration in the state (A).
[FIG. 17] A side view showing the drive pulley and a driven pulley in the belt clutch shown in FIG. 17 and therearound.
[FIG. 18] A partial cross-sectional view showing the belt clutch after shifting from the state (A) to a state (B).

### Description of Embodiments

In the following, some embodiments of the present teaching will be described with reference to the drawings. The present teaching is not limited to the embodiments below.

### <First Embodiment>

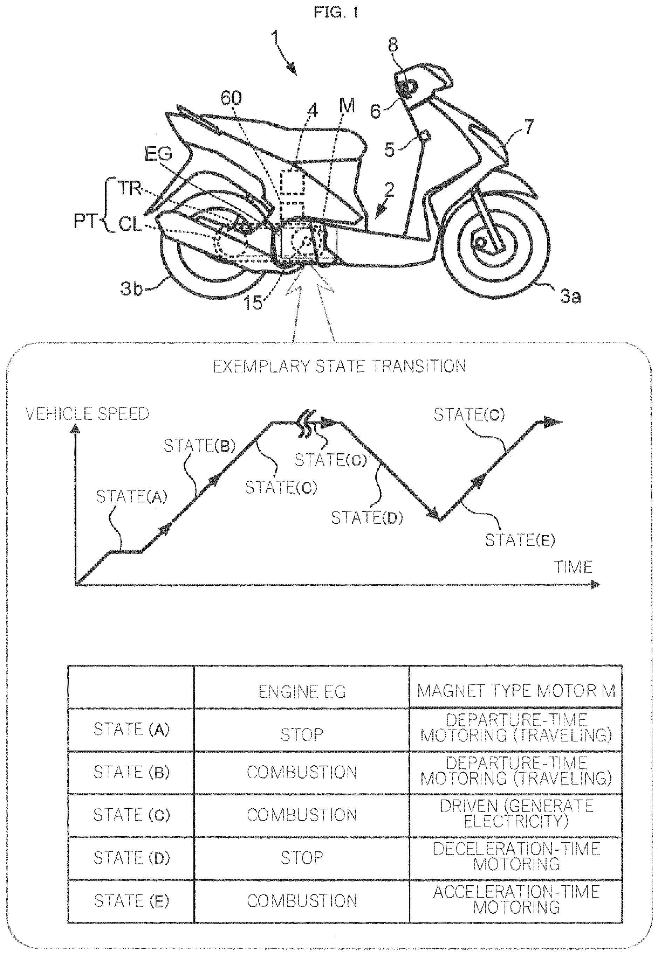

FIG. 1 is an explanatory diagram of a straddled vehicle 1 according to a first embodiment. The upper part of the Figure schematically shows the straddled vehicle 1 in a side view. The lower part of the Figure shows the relationship of an elapsed time and a vehicle speed in the course of the straddled vehicle 1 departing, decelerating, and accelerating again.

The straddled vehicle 1 shown in FIG. 1 includes a vehicle body 2 and wheels 3a, 3b. Specifically, the straddled vehicle 1 is a motorcycle. The straddled vehicle 1 is an example of a vehicle.

The straddled vehicle 1 includes an engine EG. The engine EG is a four-stroke single cylinder engine. The engine EG has a crankshaft 15. The engine EG outputs power through the crankshaft 15.

The straddled vehicle 1 includes a magnet type motor M. The magnet type motor M includes a rotor 30 and a stator 40. The rotor 30 includes a permanent magnet 37. The rotor 30 is connected to the crankshaft 15 such that power transmission between the rotor 30 and the crankshaft 15 is allowed without interposition of a clutch and such that the rotor 30 can rotate with a fixed speed ratio relative to the crankshaft 15. The stator 40 is arranged opposed to the rotor 30. The magnet type motor M rotates the crankshaft 15 at least when starting a combustion action of the engine EG. In this embodiment, the magnet type motor M is configured to, when driven by the engine EG, function as a generator to generate electricity.

The straddled vehicle 1 includes an electricity storage device 4. The electricity storage device 4 supplies electricity to the magnet type motor M. The electricity storage device 4 is charged using electricity that is generated when the magnet type motor M functions as a generator.

The straddled vehicle 1 includes an accelerator operator 8. The accelerator operator 8 is configured to receive a torque request from a driver, and is operated to instruct the engine EG to make an output. The accelerator operator 8 is configured to, when operated by the driver, receive an instruction about an increase or decrease in the output of the engine EG.

The straddled vehicle 1 includes the wheel 3b. The wheel 3b is an example of a driven member. The wheel 3b is configured to be driven by power outputted from the engine EG, to make the straddled vehicle 1 move forward.

The straddled vehicle 1 includes a power transmission device PT. The power transmission device PT is configured to transmit power from the crankshaft 15 to the wheel 3b. The power transmission device PT includes a transmission TR and a clutch CL. The transmission TR is a continuously variable transmission, for example. The transmission TR is capable of changing a gear ratio which is the ratio of a rotation speed output to a rotation speed input. The transmission TR is capable of changing the gear ratio corresponding to the rotation speed of the wheel 3b relative to the rotation speed of the crankshaft 15. The clutch CL is a drum type centrifugal clutch, for example.

The straddled vehicle 1 includes a control device 60 serving as a control section. The control device 60 is configured to control the magnet type motor M and the engine EG. The control device 60 controls the magnet type motor M and the engine EG, to make the straddled vehicle 1 travel in a manner described below.

If the control device 60 receives a torque request caused by the driver operating the accelerator operator 8 in a state where the combustion action of the engine EG is stopped and the wheel 3b is not driven; the magnet type motor M drives the wheel 3b by causing the crankshaft 15 to rotate with the electricity in the electricity storage device 4 in the state where the combustion action of the engine EG is stopped, so that the straddled vehicle 1 travels (state (A)). In the state (A), the engine EG has its combustion action stopped, and the magnet type motor M causes motoring to make the straddled vehicle 1 depart and travel (departure-time motoring).

If the control device 60 receives a torque request caused by the driver additionally or continuously operating the accelerator operator 8 in a state where the magnet type motor M drives the wheel 3b by causing the crankshaft 15 to rotate with the electricity in the electricity storage device 4 while the combustion action of the engine EG is stopped; the control device 60 supplies a fuel to the engine EG and starts the combustion action of the engine EG, so that the wheel 3b is driven by the engine EG as well as the magnet type motor M to make the straddled vehicle 1 travel (state (B)). In the state (B), the engine EG performs the combustion action, and the magnet type motor M continues the departure-time motoring. The state (B) takes place after the state (A).

If the control device 60 receives a torque request caused by the driver additionally or continuously operating the accelerator operator 8 while the straddled vehicle 1 is in the state (B); the control device 60 stops the magnet type motor M from providing a positive torque which is in a forward rotation direction to the crankshaft 15, and has the wheel 3b driven by the engine EG, to make the straddled vehicle 1 travel (state (C)). The state (C) may not necessarily take place after and subsequent to the state (B). It may be possible that the state (C) takes place if a torque request caused by the driver operating the accelerator operator 8 is received while the straddled vehicle 1 is in the state (A).

In the state (C), the straddled vehicle 1 is driven by the engine EG, to travel. A driving force exerted by the engine EG varies depending on the amount of operation on the accelerator operator 8. When no torque request is received while the straddled vehicle 1 is decelerating, the control device 60 stops the combustion action of the engine EG, and performs deceleration-time motoring whereby the magnet type motor M causes the crankshaft to rotate with the electricity in the electricity storage device 4, in order that the rotation of the crankshaft 15 continues with deceleration (state (D)). The deceleration-time motoring is performed in at least part of a period for which the straddled vehicle 1 is decelerating. The state (D) may not necessarily take place after and subsequent to the state (C). It may be possible that the state (D) takes place after and subsequent to the state (B). It may also be possible that the state (D) takes place after the state (A). In such a case, a state where the combustion action of the engine EG is stopped continues over both the state (A) and the state (D).

If the control device 60 receives a torque request caused by the driver operating the accelerator operator 8 while the straddled vehicle 1 is decelerating, the control device 60 performs acceleration-time motoring whereby the magnet type motor M causes the crankshaft 15 to rotate with the electricity in the electricity storage device 4, in order that the rotation of the crankshaft 15 accelerates (state (E)). The state (E) takes place after the state (D). In the state (E), the straddled vehicle 1 is driven at least by the magnet type motor M. In the state (E), the straddled vehicle 1 may be driven by the magnet type motor M and the engine EG. More specifically, in the state (E), the control device 60 may supply the fuel to the engine EG and cause combustion of the engine EG, in addition to the acceleration-time motoring action. The combustion of the engine EG may be started simultaneously with the acceleration-time motoring action, or may be started after the acceleration-time motoring action is started.

If the control device 60 receives a torque request caused by the driver additionally or continuously operating the accelerator operator 8 while the straddled vehicle 1 is in the state (E), the control device 60 stops the magnet type motor M from providing a positive torque which is in a forward rotation direction to the crankshaft 15, and has the wheel 3b driven by the engine EG, to make the straddled vehicle 1 travel (state (C)). The state (C) may not necessarily take place after and subsequent to the state (E). It may be possible that the state (C) takes place in response to reception of a torque request caused by the driver operating the accelerator operator 8 while the straddled vehicle 1 is in the state (D).

The straddled vehicle 1 is capable of traveling with a state transition shown in FIG. 1. The state transition shown in FIG. 1 is an example of state transitions that can be experienced by the straddled vehicle 1. The straddled vehicle 1 may not always have to travel in accordance with the exemplary state transition shown in FIG. 1. The state transition of the straddled vehicle 1 depends on vehicle conditions and travel conditions. To be specific, the state transition of the straddled vehicle 1 depends on, for example, a received torque request and the amount of electricity stored in the electricity storage device 4. In response to some torque request received, the straddled vehicle 1 in the state (A) may decelerate and terminate traveling without transitioning to state (B) or the state (C). The straddled vehicle 1 in the state (D) may continue deceleration and terminate traveling without transitioning to the state (E) or the state (C). Depending on the amount of electricity stored in the electricity storage device 4, traveling with the magnet type motor may not be performed, or deceleration motoring and/or acceleration motoring may not be performed. In the state (C), the magnet type motor M may temporarily provide a positive torque in the forward rotation direction to the crankshaft 15. In the state (C), the engine EG may temporarily stop the combustion action.

The straddled vehicle 1 further includes a main switch 5. The main switch 5 is a switch used to supply electricity to each part of the straddled vehicle 1. The straddled vehicle 1 includes a starter switch 6. The starter switch 6 is a switch operable by the driver. In this embodiment, the starter switch 6 is a switch that receives a departure permission request when operated by the driver. The straddled vehicle 1 includes the accelerator operator 8. The accelerator operator 8 is configured to give a torque request, for example, an instruction for the engine EG to make an output, in accordance with an operation on the accelerator operator 8. The accelerator operator 8 is specifically an accelerator grip.

In the straddled vehicle 1, electricity supply to the control device 60 is started upon an operation on the main switch 5 in the drive stop state. Then, upon an operation on the starter switch 6, departure of the straddled vehicle 1 is permitted. Then, upon an operation on the accelerator operator 8, the magnet type motor M causes the straddled vehicle 1 to travel with the combustion action of the engine EG stopped.

The starter switch 6 may be omitted. In such a configuration, electricity supply to the control device 60 is started upon an operation on the main switch 5 in the drive stop state, and an operation on the accelerator operator 8 causes the magnet type motor M to make the straddled vehicle 1 travel with the combustion action of the engine EG stopped. Alternatively, the straddled vehicle 1 may be configured to start traveling in response to an operation on the accelerator operator 8, without an operation on the main switch 5.

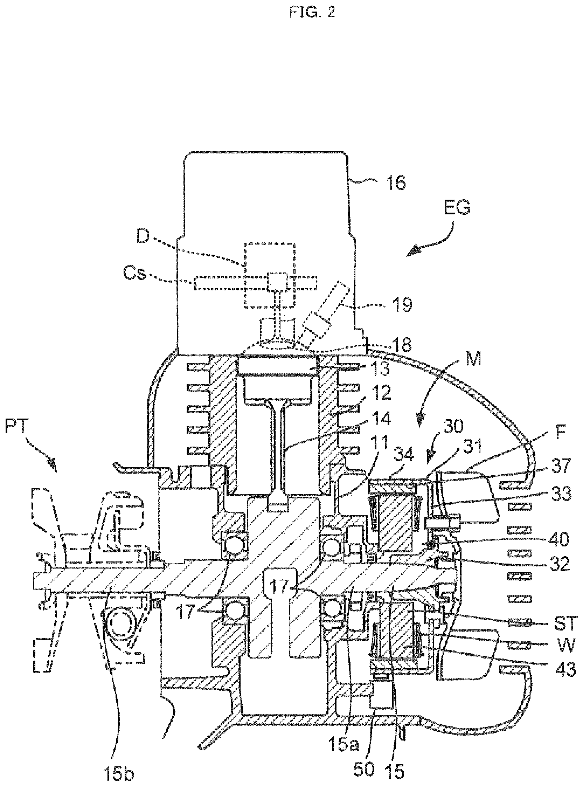

FIG. 2 is a partial cross-sectional view schematically showing an overview configuration of the engine EG shown in FIG. 1 and therearound.

The engine EG includes a crank case 11, a cylinder 12, a piston 13, a connecting rod 14, and the crankshaft 15. The piston 13 is disposed in the cylinder 12 and is capable of reciprocating therein. The crankshaft 15 is disposed in the crank case 11 and is rotatable therein. The crankshaft 15 is coupled to the piston 13 via the connecting rod 14. A cylinder head 16 is attached to the upper side of the cylinder 12. The cylinder 12, the cylinder head 16, and the piston 13 define a combustion chamber. The cylinder head 16 has an exhaust valve 18 and an intake valve (not shown). The exhaust valve 18 controls discharge of an exhaust gas from the cylinder 12. The intake valve controls supply of a mixed gas to the combustion chamber in the cylinder 12. The exhaust valve 18 and the intake valve are operated by an action of a cam (not shown) provided to a camshaft Cs which rotates in conjunction with the crankshaft 15. The crankshaft 15 is supported in a freely rotatable manner by the crank case 11 with a pair of bearings 17 interposed therebetween.

The crankshaft 15 included in the engine EG has a first end portion 15a (a right end portion in the Figure) to which the magnet type motor M is attached. No clutch is disposed between the crankshaft 15 and the magnet type motor M. The crankshaft 15 included in the engine EG has a second end portion 15b (a left end portion in the Figure) to which a power transmission device PT is provided.

The engine EG includes a decompression device D. The decompression device D is outlined in FIG. 2. The decompression device D acts to decrease the pressure in the cylinder 12 in a compression stroke. In the compression stroke, the decompression device D opens the exhaust valve 18 so that a part of mixed gas is discharged out of the cylinder 12. The decompression device D is configured to open the exhaust valve 18 in the compression stroke if the rotation speed of the crankshaft 15 is equal to or lower than a decompression upper limit speed that is set for the decompression device D. The camshaft Cs which rotates in conjunction with the crankshaft 15 is provided with a mechanism that causes the decompression device D to open the exhaust valve 18. The decompression device D, for example, uses a centrifugal force involved in rotation of the camshaft Cs, for the action to open the exhaust valve 18. Since the decompression device D lowers the pressure of the mixed gas in the cylinder 12 in the compression stroke, a compression reaction force acting on the piston 13 is reduced. In a high-load region, a load on an action of the piston 13 is reduced.

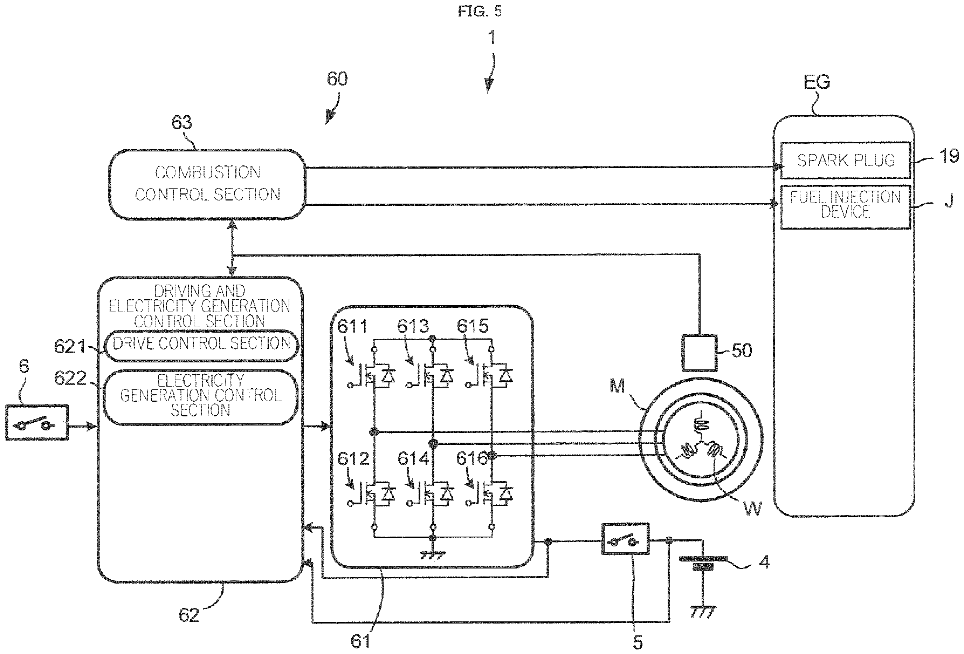

The engine EG also includes a throttle valve (not shown) and a fuel injection device J (see FIG. 5). The throttle valve is opened with an opening degree that is based on the amount of operation on the accelerator operator 8 (see FIG. 1). The throttle valve adjusts the amount of flowing air in accordance with its opening degree, and thus adjusts the amount of air to be supplied into the cylinder 12. The fuel injection device J injects a fuel, and thus supplies the fuel to the combustion chamber in the cylinder 12. A mixed gas composed of the air flowing through the throttle valve and the fuel injected from the fuel injection device J is supplied to the combustion chamber in the cylinder 12. The engine EG is provided with a spark plug 19. The spark plug 19 ignites the mixed gas in the cylinder 12, so that the mixed gas is combusted.

The engine EG is an internal combustion engine. The engine EG is supplied with the fuel. The engine EG performs a combustion action whereby the mixed gas is combusted, to output power (torque).

More specifically, the mixed gas containing the fuel supplied to the combustion chamber is combusted so that the piston 13 moves. The combustion of the mixed gas makes the piston 13 reciprocate. In conjunction with the reciprocation of the piston 13, the crankshaft 15 rotates. The power is outputted to the outside of the engine EG through the crankshaft 15. The wheel 3b (see FIG. 1), which receives the power outputted from the engine EG through the crankshaft 15, drives the straddled vehicle 1.

The engine EG outputs the power through the crankshaft 15. The power of the crankshaft 15 is transmitted to the wheel 3b through the power transmission mechanism PT (see FIG. 1). The straddled vehicle 1 is driven by the wheel 3b receiving the power from the engine EG through the crankshaft 15.

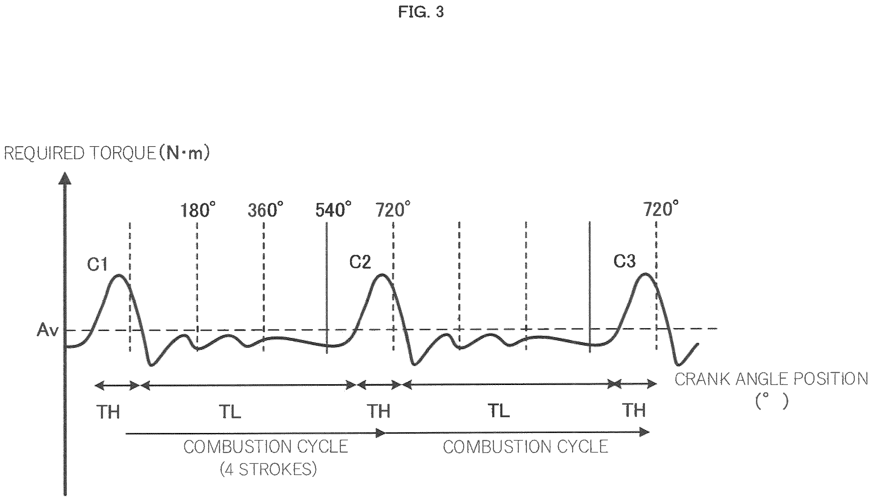

FIG. 3 is an explanatory diagram schematically showing the relationship between a crank angle position of the engine EG and a required torque. FIG. 3 shows a torque required for the crankshaft 15 to rotate with no combustion action of the engine EG.

The engine EG is a four-stroke engine. The engine EG has, during one combustion cycle composed of four strokes, a high-load region TH in which a high load is put on rotation of the crankshaft 15 and a low-load region TL in which a load put on rotation of the crankshaft 15 is lower than the load in the high-load region TH. The high-load region means a region in one combustion cycle of the engine EG where a load torque is higher than an average value Av of the load torque over the one combustion cycle. On the basis of the rotation angle of the crankshaft 15, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. The engine EG, during its rotation, repeats a combustion stroke (expansion stroke), an exhaust stroke, an intake stroke, and a compression stroke. The compression stroke overlaps the high-load region TH.

One combustion cycle of the engine EG includes one combustion stroke, one exhaust stroke, one intake stroke, and one compression stroke. In the intake stroke, the mixed gas is supplied to the combustion chamber. In the compression stroke, the piston 13 compresses the mixed gas in the combustion chamber. In the expansion stroke, the mixed gas ignited by the spark plug 19 combusts and pushes the piston 13. In the exhaust stroke, an exhaust gas produced after the combustion is discharged out of the combustion chamber.

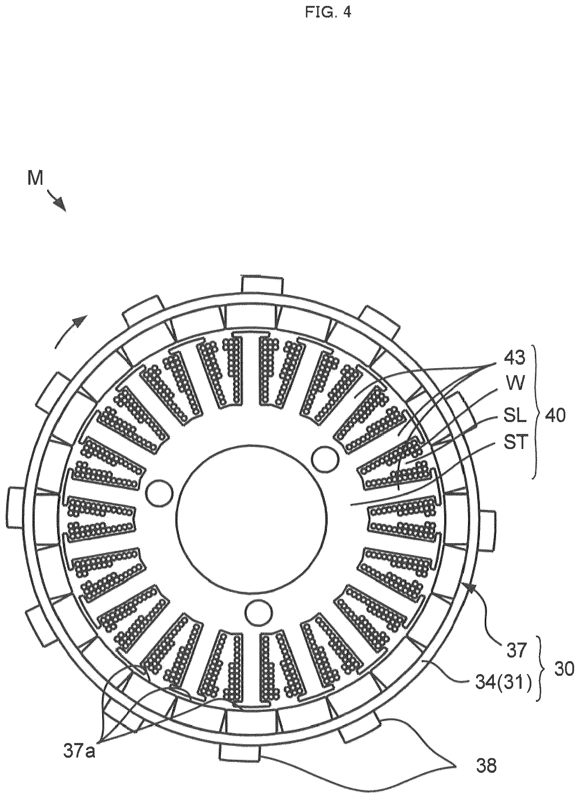

FIG. 4 is a cross-sectional view showing a cross-section of the magnet type motor M of FIG. 2, as taken perpendicular to the rotation axis thereof. Referring to FIG. 2 and FIG. 4, the magnet type motor M will be described.

The magnet type motor M is a three-phase brushless motor of permanent magnet type. The magnet type motor M also functions as a three-phase brushless generator of permanent magnet type.

The magnet type motor M includes the rotor 30 and the stator 40. The magnet type motor M according to this embodiment is of radial gap type. The magnet type motor M is of outer rotor type. That is, the rotor 30 is an outer rotor. The stator 40 is an inner stator.

The rotor 30 includes a rotor body part 31. The rotor body part 31 is made of, for example, a ferromagnetic material. The rotor body part 31 is in the shape of a bottomed tube. The rotor body part 31 includes a tubular boss portion 32, a disk-shaped bottom wall portion 33, and a tubular back yoke portion 34. The bottom wall portion 33 and the back yoke portion 34 are integrally formed. Here, structuring the bottom wall portion 33 and the back yoke portion 34 as separate parts may be acceptable. The bottom wall portion 33 and the back yoke portion 34 are fixed to the crankshaft 15 via the tubular boss portion 32. The rotor 30 is not provided with a winding to which a current is supplied.

The rotor 30 includes the permanent magnet 37. The rotor 30 includes a plurality of magnetic pole portions 37a. The plurality of magnetic pole portions 37a are constituted of the permanent magnet 37. The plurality of magnetic pole portions 37a are provided on an inner circumferential surface of the back yoke portion 34. In this embodiment, the permanent magnet 37 includes a plurality of permanent magnets. Thus, the rotor 30 includes the plurality of permanent magnets. The plurality of magnetic pole portions 37a are provided in the plurality of permanent magnets, respectively. The permanent magnet 37 may alternatively be configured as a single annular permanent magnet. In such a configuration, the single permanent magnet is magnetized such that the plurality of magnetic pole portions 37a appear side by side on the inner circumferential surface.

The plurality of magnetic pole portions 37a are provided such that N-pole and S-pole appear alternately with respect to a circumferential direction of the magnet type motor M. In this embodiment, the number of magnetic poles of the rotor 30 opposed to the stator 40 is twenty-four. The number of magnetic poles of the rotor 30 means the number of magnetic poles opposed to the stator 40. No magnetic material is disposed between the magnetic pole portions 37a and the stator 40. The magnetic pole portions 37a are disposed outside the stator 40 with respect to a radial direction of the magnet type motor M. The back yoke portion 34 is disposed outside the magnetic pole portions 37a with respect to the radial direction. The number of magnetic pole portions 37a included in the magnet type motor M is more than the number of teeth 43. The rotor 30 may be of interior permanent magnet type (IPM type) in which the magnetic pole portions 37a are embedded in a magnetic material; however, it is preferable that the rotor 30 is of surface permanent magnet type (SPM type) in which the magnetic pole portions 37a are exposed from a magnetic material as adopted in this embodiment.

A cooling fan F is provided to the bottom wall portion 33 of the rotor 30.

The stator 40 includes a stator core ST and a plurality of stator windings W. The stator core ST includes a plurality of teeth 43 arranged at intervals with respect to the circumferential direction. The plurality of teeth 43 integrally extend radially outward from the stator core ST. In this embodiment, eighteen teeth 43 in total are arranged at intervals with respect to the circumferential direction. In other words, the stator core ST has eighteen slots SL in total that are arranged at intervals with respect to the circumferential direction. The teeth 43 are arranged at equal intervals with respect to the circumferential direction.

The number of magnetic pole portions 37a is equal to 4/3 of the number of slots. Each slot is an interval between adjacent ones of the teeth 43. The number of slots is equal to the number of teeth 43. It is preferable that the number of magnetic poles 37a is more than 2/3 of the number of slots, as illustrated in this embodiment. It is further preferable that the number of magnetic poles 37a is equal to or more than the number of slots. It is still further preferable that the number of magnetic poles 37a is more than the number of slots. It is particularly preferable that the number of magnetic poles 37a is equal to 4/3 of the number of slots. This is because an output torque of the magnet type motor generator at a low rotation speed is increased, which enables the vehicle to move forward with a further increased responsiveness.

The stator winding W is wound around each of the teeth 43. That is, the multi-phase stator windings W are disposed through the slots SL. In a state shown in FIG. 4, the stator windings W are in the slots SL. Each of the multi-phase stator windings W belongs to any of U-phase, V-phase, and W-phase. The stator windings W are arranged in the order of U-phase, V-phase, and W-phase, for example. How the winding W is wound is not particularly limited. The winding W may be wound with either in a concentrated winding manner or in a distributed winding manner.

The rotor 30 includes, on its outer surface, a plurality of detection object parts 38 for detection of the rotation position of the rotor 30. Magnetic effects are used to detect the plurality of detection object parts 38. The plurality of detection object parts 38 arranged at intervals with respect to the circumferential direction are provided on the outer surface of the rotor 30. The detection object parts 38 are made of a ferromagnetic material.

A rotor position detection device 50 is a device that detects the position of the rotor 30. The rotor position detection device 50 is disposed at a position allowed to be opposed to the plurality of detection object parts 38. The rotor position detection device 50 includes a pick-up coil and a magnet. The rotor position detection device 50 magnetically detects the detection object parts 38. The rotor position detection device for detecting the position of the rotor may be constituted of a Hall IC that detects the magnetic pole portions 37.

The rotor 30 of the magnet type motor M is connected to the crankshaft 15 such that the rotor 30 is rotated along with rotation of the crankshaft 15. More specifically, the rotor 30 is connected to the crankshaft 15 such that the rotor 30 is rotated with a fixed speed ratio relative to the crankshaft 15. The rotor 30 is directly connected to the crankshaft 15 of the engine EG. In this embodiment, the rotor 30 is attached to the crankshaft 15 without interposition of any clutch. A power transmission mechanism such as a belt, a chain, a gear, a speed reducer, or a speed increaser is not interposed between the rotor 30 and the crankshaft 15. The rotor 30 is rotated with a speed ratio of 1:1 relative to the crankshaft 15. The magnet type motor M is configured to rotate the rotor 30 at a time of combustion action of the engine EG. The rotation axis of the magnet type motor M substantially coincides with the rotation axis of the crankshaft 15.

At a time of engine start, the magnet type motor M drives the crankshaft 15 in forward rotation to start the engine EG. At a time of combustion action of the engine EG, the magnet type motor M is driven by the engine EG to generate electricity. Thus, the magnet type motor M has both a function to start the engine EG by driving the crankshaft 15 in forward rotation and a function to generate electricity by being driven by the engine EG at a time of combustion action of the engine EG. In at least part of a period following starting the engine EG, the magnet type motor M is driven in forward rotation by the crankshaft 15, to function as a generator. In at least part of a period for which the engine EG makes the combustion action, the magnet type motor M as well as the engine EG may provide a positive torque in the forward rotation direction of the crankshaft 15 to the crankshaft 15 by using the electricity in the electricity storage device 4.

FIG. 5 is a block diagram showing an overview electrical configuration of the straddled vehicle 1 shown in FIG. 1. The straddled vehicle 1 is provided with an inverter 61. The control device 60 controls respective parts, including the inverter 61, of the straddled vehicle 1.

The magnet type motor M and the electricity storage device 4 are connected to the inverter 61. When the magnet type motor M acts as a motor, the electricity storage device 4 supplies electricity to the magnet type motor M. The electricity storage device 4 is charged using electricity that is generated by the magnet type motor M.

The electricity storage device 4 is connected to the inverter 61 and to an electricity consuming apparatus (not shown) via the main switch 5. The electricity consuming apparatus is an apparatus that consumes electricity when operating. Examples of the electricity consuming apparatus include accessories such as a headlight 7 (see FIG. 1).

The inverter 61 includes a plurality of switching parts 611 to 616. The inverter 61 of this embodiment includes six switching parts 611 to 616. The switching parts 611 to 616 constitute a three-phase bridge inverter. The plurality of switching parts 611 to 616 are connected to the respective phases of the multi-phase stator windings W. To be specific, among the plurality of switching parts 611 to 616, every two switching parts that are connected in series constitute a half bridge. The half bridges each corresponding to each phase are connected in parallel to the electricity storage device 4. Those of the switching parts 611 to 616 constituting the half bridge of each phase are connected to the corresponding phase of the multi-phase stator windings W.

The switching parts 611 to 616 control a current flow between the electricity storage device 4 and the magnet type motor M. Specifically, the switching parts 611 to 616 selectively allow or block the passing of a current between the electricity storage device 4 and the multi-phase stator windings W. More specifically, when the magnet type motor M functions as a motor, energizing each of the multi-phase stator windings W is selectively allowed or stopped by on/off-operation on the switching parts 611 to 616. When the magnet type motor M functions as a generator, the passing of a current between each of the stator windings W and the electricity storage device 4 is selectively allowed or blocked by on/off-operation on the switching parts 611 to 616. By switching on/off the switching parts 611 to 616 one after another, a voltage control and a rectification are performed on a three-phase AC outputted from the magnet type motor M. The switching parts 611 to 616 control a current that the magnet type motor M outputs to the electricity storage device 4.

Each of the switching parts 611 to 616 has a switching element. The switching element is, for example, a transistor, and more specifically, an FET (Field Effect Transistor).

The fuel injection device J, the spark plug 19, and the electricity storage device 4 are connected to the control device 60. The rotor position detection device 50 is also connected to the control device 60. The control device 60 acquires the rotation speed of the crankshaft 15 based on a detection result obtained by the rotor position detection device 50. Although the straddled vehicle 1 is configured such that the rotor position detection device 50 acquires the rotation speed of the crankshaft 15, how to acquire the rotation speed of the crankshaft 15 is not limited to this example. In addition to or instead of the rotor position detection device 50, a detector for detecting the rotation speed of the wheel 3b serving as a driven member may be provided in the straddled vehicle 1.

The control device 60 acquires the amount of operation on the accelerator operator 8 and the rate of increase in the amount of operation based on, for example, a detection result obtained by a throttle position sensor 80 (not shown).

The control device 60 includes a driving and electricity generation control section 62 and a combustion control section 63.

The driving and electricity generation control section 62 controls the on/off-operation on each of the switching parts 611 to 616, to control the operation of the magnet type motor M. The driving and electricity generation control section 62 includes a drive control section 621 and an electricity generation control section 622.

The combustion control section 63 controls the spark plug 19 and the fuel injection device J, to control the combustion action of the engine EG. The combustion control section 63 controls the spark plug 19 and the fuel injection device J, to control the power of the engine EG. The combustion control section 63 controls the spark plug 19 and the fuel injection device J in accordance with the opening degree of a throttle valve SV which is indicated by a signal outputted from the throttle position sensor 80.

The control device 60 is composed of a computer including a central processing unit (not shown) and a storage device (not shown). The central processing unit executes arithmetic processing based on a control program. The storage device stores data relating to programs and arithmetic operations. The combustion control section 63 and the driving and electricity generation control section 62 including the drive control section 621 and the electricity generation control section 622 are implemented by a computer (not shown) and a control program executable by the computer. Thus, below-described operations performed respectively by the combustion control section 63 and by the driving and electricity generation control section 62 including the drive control section 621 and the electricity generation control section 622 can be considered as operations performed by the control device 60. The driving and electricity generation control section 62 and the combustion control section 63 may be, for example, either configured as separate devices placed at a distance from each other, or integrated as a single device.

The starter switch 6 is connected to the control device 60. The starter switch 6 is actuated by the driver at a time of starting the engine EG. The main switch 5 supplies electricity to the control device 60 in accordance with an operation on the main switch 5.

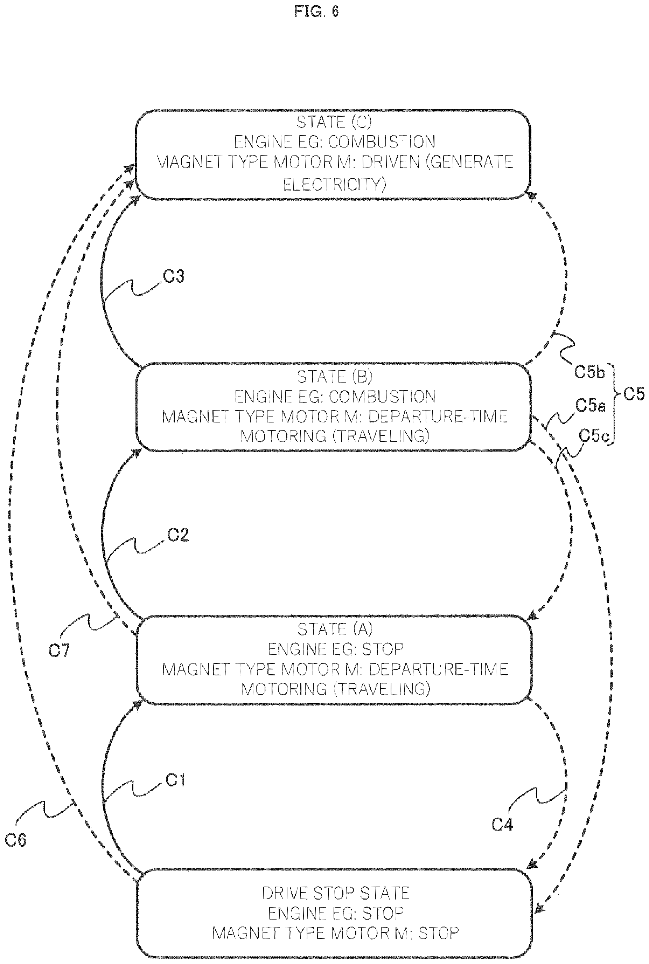

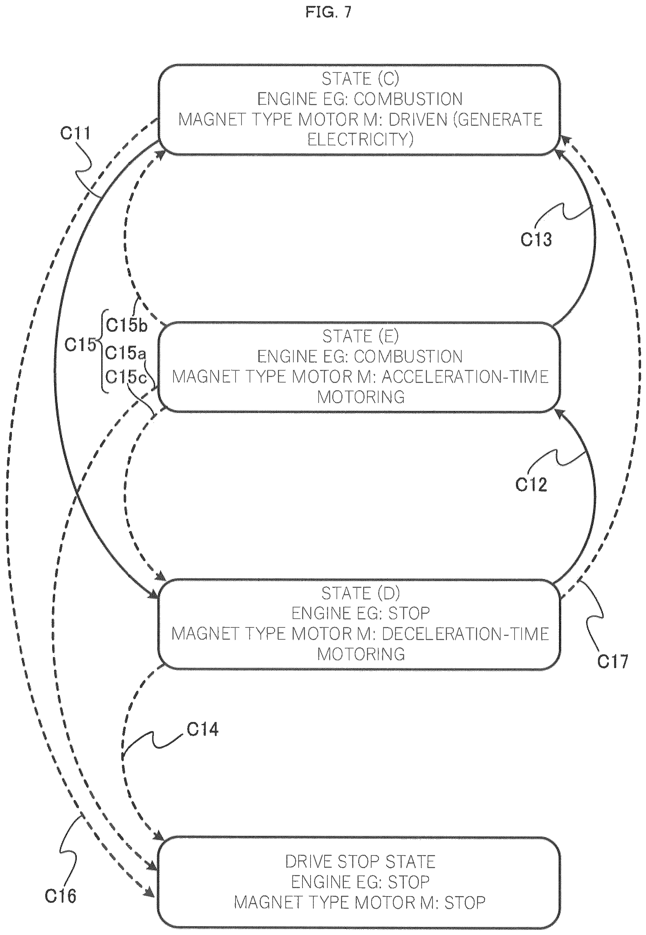

The driving and electricity generation control section 62 and the combustion control section 63 of the control device 60 control the engine EG and the magnet type motor M. Controls performed in the straddled vehicle 1 will be described with reference to FIG. 6 and FIG. 7.

FIG. 6 is a state transition diagram outlining state transitions of the straddled vehicle at a time of departure. FIG. 6 illustrates a process from the drive stop state to the state (C). In the Figure, state transitions indicated by the solid lines are included in the exemplary state transition shown in FIG. 1. State transitions indicated by the broken lines are the other state transitions. The straddled vehicle 1 may have state transitions different from the state transitions illustrated in FIG. 6.

The drive stop state is a state where the combustion action of the engine EG is stopped and the wheel 3b is not driven. In the drive stop state, the wheel 3b is driven by neither the engine EG nor the magnet type motor M. The straddled vehicle 1 does not travel with a driving force. The straddled vehicle 1 may travel by inertia, however. In the drive stop state, an operation on the main switch 5 starts electricity supply from the electricity storage device 4 to the control device 60. An operation on the starter switch 6 in this condition causes the control device 60 to permit departure of the straddled vehicle 1.

If, in the drive stop state, a torque request caused by the driver operating the accelerator operator 8 is received (C1), the control device 60 (the drive control section 621) controls the on/off-operation on each of the switching parts 611 to 616 of the inverter 61, to supply electricity from the electricity storage device 4 to the magnet type motor M and more specifically to the stator windings W of the respective phases. Consequently, the departure-time motoring is started. The amount of electricity supply increases in accordance with an increase in the amount of operation on the accelerator operator 8. As a result, the rotation speed of the crankshaft 15 increases, so that the straddled vehicle 1 departs and travels (state (A)). The straddled vehicle 1 of this embodiment includes a centrifugal clutch as the clutch CL. In the drive stop state, power transmission between the crankshaft 15 and the wheel 3b is disconnected. Thus, a time of departure of the straddled vehicle 1 is when the rotation speed of the crankshaft 15 exceeds at least a rotation speed (clutch-in rotation speed) obtained in the instant of the crankshaft 15 starting power transmission with the wheel 3b. The present teaching is not limited to this example, however. The straddled vehicle may not necessarily include a clutch. With such a configuration, starting rotation of the crankshaft makes the straddled vehicle depart. After the departure, the magnet type motor M drives the wheel 3b, to make the straddled vehicle 1 travel. In the state (A), the output of the magnet type motor M varies depending on the amount of operation on the accelerator operator 8. In the state (A), therefore, the speed of the straddled vehicle 1 varies depending on the output of the magnet type motor M.

If, in the state (A), a torque request caused by an additional or continuous operation on the accelerator operator 8 is received while the straddled vehicle 1 is traveling (C2), the control device 60 (the combustion control section 63) controls the spark plug 19 and the fuel injection device J, to start the combustion action of the engine EG. As a result, the straddled vehicle 1 is driven by both the engine EG and the magnet type motor M (state (B)). No particular limitation is put on a timing of a transition from the state (A) to the state (B), except that the transition has to take place when a torque request caused by an additional or continuous operation on the accelerator operator 8 is received. The timing of the transition from the state (A) to the state (B) may be determined in accordance with, for example, the rotation speed of the crankshaft 15, the rotation speed of the wheel 3b, the speed of the straddled vehicle 1, a charging state of (the amount of electricity stored in) the electricity storage device 4, a duration of the departure-time motoring, or a travel distance under the departure-time motoring, or may be determined based on a combination of some of them.

If, in the state (B), a torque request caused by an additional or continuous operation on the accelerator operator 8 is received while the straddled vehicle 1 is traveling (C3), the control device 60 (the drive control section 621) controls the on/off-operation on each of the switching parts 611 to 616 of the inverter 61 such that the electricity supply from the electricity storage device 4 to the magnet type motor M stops. Accordingly, the magnet type motor M stops providing a positive torque in the forward rotation direction to the crankshaft 15. As a result, the straddled vehicle 1 is driven by the engine EG (state (C)). Moreover, the control device 60 (the electricity generation control section 622) controls the on/off-operation on each of the switching parts 611 to 616 of the inverter 61 such that electricity generated by the magnet type motor M is supplied to the electricity storage device 4. Accordingly, the generated electricity is stored in the electricity storage device 4. Upon a transition from the state (B) to the state (C), the magnet type motor M stops driving the crankshaft 15 in forward rotation. Thereafter, in the state (C), the magnet type motor M may drive the crankshaft 15 in forward rotation while the straddled vehicle 1 is driven by the engine EG.

In this manner, upon reception of a torque request in the drive stop state, the straddled vehicle 1 transitions to the state (A), to be driven by the magnet type motor M with the combustion action of the engine EG stopped. Upon reception of an additional or continuous torque request in the state (A), the straddled vehicle 1 transitions to the state (B), to be driven by the engine EG and the magnet type motor M. Upon reception of an additional or continuous torque request in the state (B), the straddled vehicle 1 transitions to the state (C), to be driven by the engine EG. State transitions at a time of departure are not limited to the above. Another example of the state transitions is as follows.

If, in the state (A), reception of the torque request stops while the straddled vehicle 1 is traveling (C4), the control device 60 stops the magnet type motor M from rotating the crankshaft 15. Consequently, the state of the straddled vehicle 1 transitions from the state (A) to the drive stop state. Accordingly, the straddled vehicle 1 decelerates and stops. Here, when reception of the torque request stops, the control device 60 may cause the magnet type motor M to continuously rotate the crankshaft 15 such that the rotation speed of the crankshaft 15 can be less than a rotation speed (clutch-out rotation speed) at which power transmission between the crankshaft 15 and the wheel 3b is disconnected. Accordingly, the straddled vehicle 1 decelerates and stops, but the crankshaft 15 keeps rotating. This enables the magnet type motor M to quickly resume driving the straddled vehicle 1 upon reception of a torque request again. The rotation of the crankshaft 15 continued by the magnet type motor M may be stopped in accordance with an elapsed time, an electricity storage state of the electricity storage device 4, and the like.

If, in the state (B), reception of the torque request stops while the straddled vehicle 1 is traveling (C5), the control device 60 can perform any of the following, for example. The control device 60 can stop the combustion action of the engine EG, and also can stop the magnet type motor M from driving the wheel 3b (C5a). Consequently, the state of the straddled vehicle 1 transitions to the drive stop state. Alternatively, the control device 60 can stop the magnet type motor M from driving the wheel 3b while continuing the combustion action of the engine EG such that the rotation speed of the crankshaft 15 can be less than the rotation speed (clutch-out rotation speed) at which power transmission between the crankshaft 15 and the wheel 3b is disconnected (C5b). Consequently, the engine EG is idling. The state of the straddled vehicle 1 transitions to the state (C). Alternatively, the control device 60 can cause the magnet type motor M to continuously drive the wheel 3b while stopping the combustion action of the engine EG such that the rotation speed of the crankshaft 15 can be less than the rotation speed (clutch-out rotation speed) at which power transmission between the crankshaft 15 and the wheel 3b is disconnected (C5c). The continuance of rotation by the magnet type motor M is as described above.

In the drive stop state, depending on the electricity storage state of the electricity storage device 4 and the like, the control device 60 may start the combustion action of the engine EG without causing the magnet type motor M to make the straddled vehicle 1 travel (C6). In the state (A), depending on the electricity storage state of the electricity storage device 4 and the like, the control device 60 may start the combustion action of the engine EG while stopping the motoring of the magnet type motor M such that the crankshaft 15 is not driven by both the magnet type motor M and the engine EG (C7).

FIG. 7 is a state transition diagram outlining state transitions of the straddled vehicle at a time of deceleration. FIG. 7 illustrates a process from the state (C) to the drive stop state. In the Figure, state transitions indicated by the solid lines are included in the exemplary state transition shown in FIG. 1. State transitions indicated by the broken lines are the other state transitions. The straddled vehicle 1 may have state transitions different from the state transitions illustrated in FIG. 7.

The state (C) is a state where the straddled vehicle 1 is driven by at least the engine EG. In the state (C), the straddled vehicle 1 is traveling. In the state (C), the straddled vehicle 1 decelerates if no torque request is received. A state where no torque request is received, as used herein, may include only a state where the amount of operation on the accelerator operator 8 is zero. The state where no torque request is received may also include a state where the accelerator operator 8 is operated with just a small operation amount so that a torque request that causes the straddled vehicle 1 to accelerate or to travel at a constant speed cannot be received and consequently the straddled vehicle 1 decelerates. When no torque request is received while the straddled vehicle 1 is decelerating (C11), the control device 60 stops the combustion action of the engine, and also performs the deceleration-time motoring in at least part of a period for which the straddled vehicle 1 is decelerating in order that the rotation of the crankshaft 15 continues with deceleration (state (D)).

In the deceleration-time motoring, the control device 60 controls the on/off-operation on the switching parts 611 to 616 such that the magnet type motor M causes the crankshaft 15 to rotate (forward rotation) with the electricity in the electricity storage device 4. The magnet type motor M consumes the electricity in the electricity storage device 4, to provide a positive torque in the forward rotation direction of the crankshaft 15 such that, for example, the crankshaft 15 continues the forward rotation with deceleration. The control device 60 controls the on/off-operation on each of the switching parts 611 to 616 such that, for example, the rotation speed of the crankshaft 15 decreases more gently as compared to when each of the switching parts 611 to 616 is turned off.

During deceleration, the magnet type motor M may function as a generator in a period other than the period for which the deceleration-time motoring is performed. The control device 60 may control the on/off-operations on the switching parts 611 to 616 such that a load (electricity generation load) that the magnet motor M applies to the crankshaft 15 is reduced. The control device 60 may control the on/off-operations on the switching parts 611 to 616 such that a current produced in each stator winding W short-circuits in the stator winding W. The control device 60 may turn off the switching parts 611 to 616.

If, in the state (D), a torque request is received (C12), the control device 60 performs the acceleration-time motoring such that the rotation of the crankshaft 15 accelerates (state (E)). In the acceleration-time motoring, too, the control device 60 controls the on/off-operations on the switching parts 611 to 616 such that the magnet type motor M causes the crankshaft 15 to rotate (forward rotation) with the electricity in the electricity storage device 4. The magnet type motor M consumes the electricity in the electricity storage device 4, to provide a positive torque in the forward rotation direction of the crankshaft 15 such that the forward rotation of the crankshaft 15 accelerates.

In the state (E), the control device 60 controls the spark plug 19 and the fuel injection device J to start the combustion action of the engine EG, as well as performs the acceleration-time motoring. As a result, the straddled vehicle 1 is driven by both the engine EG and the magnet type motor M.

If, in the state (E), a torque request caused by an additional or continuous operation on the accelerator operator 8 is received while the straddled vehicle 1 is traveling (C13), the control device 60 (the drive control section 621) controls the on/off-operation on each of the switching parts 611 to 616 of the inverter 61 such that the electricity supply from the electricity storage device 4 to the magnet type motor M stops. Accordingly, the magnet type motor M stops providing a positive torque in the forward rotation direction to the crankshaft 15. As a result, the straddled vehicle 1 is driven by the engine EG (state (C)). Moreover, the control device 60 (the electricity generation control section 622) controls the on/off-operation on each of the switching parts 611 to 616 of the inverter 61 such that electricity generated by the magnet type motor M is supplied to the electricity storage device 4. Accordingly, the generated electricity is stored in the electricity storage device 4. Upon a transition from the state (E) to the state (C), the magnet type motor M stops driving the crankshaft 15 in forward rotation. Thereafter, the magnet type motor M may drive the crankshaft 15 in a forward rotation while the straddled vehicle 1 is driven by the engine EG.

In this manner, while the straddled vehicle 1 is decelerating without any torque request received in the state (C), a transition to the state (D) takes place, in which the combustion action of the engine EG is stopped and the magnet type motor M performs the deceleration-time motoring. If a torque request is received in the state (D), the straddled vehicle 1 transitions to the state (E), to be driven by the engine EG and the magnet type motor M. If a torque request is additionally or continuously received in the state (E), the straddled vehicle 1 transitions to the state (C), to be driven by the engine EG. Here, it should be noted that a state transition at a time of deceleration or at a time of switchover from deceleration to acceleration is not limited the above. Another example of the state transitions is as follows.

If, in the state (D), no torque request is received during the deceleration-time motoring (C14), the control device 60 stops the magnet type motor M from rotating the crankshaft 15. Consequently, the state of the straddled vehicle 1 transitions from the state (D) to the drive stop state. Accordingly, the straddled vehicle 1 decelerates and stops. A timing when the control device 60 stops the magnet type motor M from rotating the crankshaft 15 is not particularly limited except that it should be in a period of no reception of a torque request. For example, the timing may be determined in accordance with the rotation speed of the crankshaft 15, the speed of the straddled vehicle 1, a duration of the deceleration-time motoring, the electricity storage state of the electricity storage device 4, and the like. The control device 60 may cause the magnet type motor M to continuously rotate the crankshaft 15 when, as a result of deceleration of the straddled vehicle 1, the rotation speed of the crankshaft 15 becomes less than the rotation speed (clutch-out rotation speed) at which power transmission between the crankshaft 15 and the wheel 3b is disconnected. Accordingly, the straddled vehicle 1 decelerates and stops, but the crankshaft 15 keeps rotating. This enables the magnet type motor M to quickly resume driving the straddled vehicle 1 upon reception of a torque request again. The rotation of the crankshaft 15 continued by the magnet type motor M may be stopped in accordance with an elapsed time, an electricity storage state of the electricity storage device 4, and the like.

If, in the state (E), reception of the torque request stops while the straddled vehicle 1 is traveling (C15), the control device 60 can control the engine EG and the magnet type motor M such that, for example, the state of the straddled vehicle 1 transitions to any of the drive stop state, the state (C), or the state (D) (C15a, C15b, C15c). The transition (C15a) from the state (E) to the drive stop state, the transition (C15b) from the state (E) to the state (C), and the transition (C15c) from the state (E) to the state (D) are the same as the transitions (C5a, C5b, C5c) shown in FIG. 6, and therefore descriptions thereof are omitted.

In the state (C), depending on the electricity storage state of the electricity storage device 4 and the like, the control device 60 may stop the combustion action of the engine EG without undergoing the deceleration-time motoring (C16). In the state (D), depending on the electricity storage state of the electricity storage device 4 and the like, the control device 60 may start the combustion action of the engine EG as well as stop the motoring of the magnet type motor M, without undergoing the acceleration-time motoring (C17).

### <Second Embodiment>

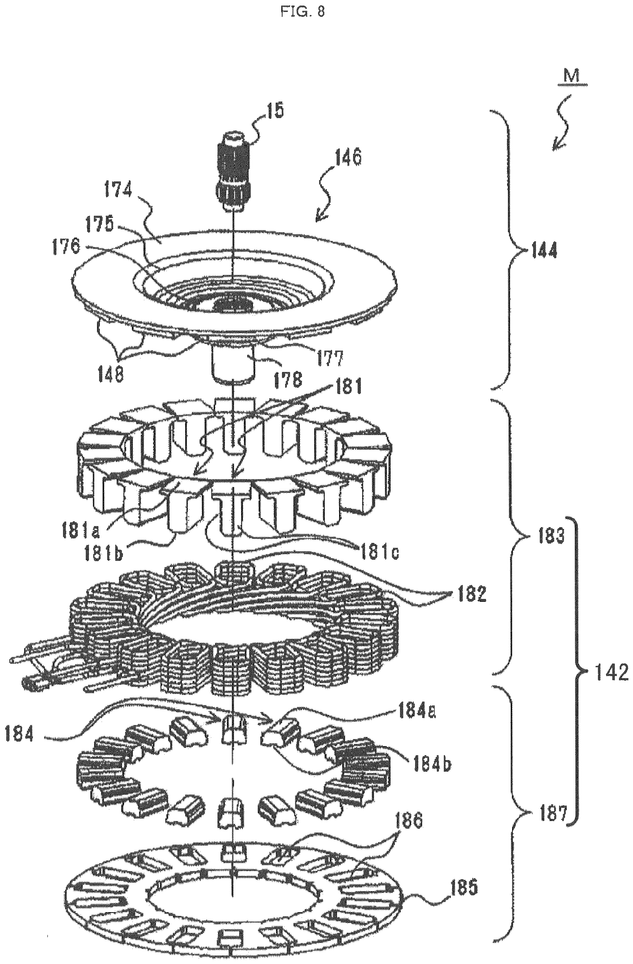

A second embodiment will now be described with reference to FIG. 8 to FIG. 11. Hereinafter, components identical to or corresponding to the components in the first embodiment will be respectively denoted by the same reference signs as in the first embodiment. The first embodiment and the second embodiment are different in the magnet type motor M.

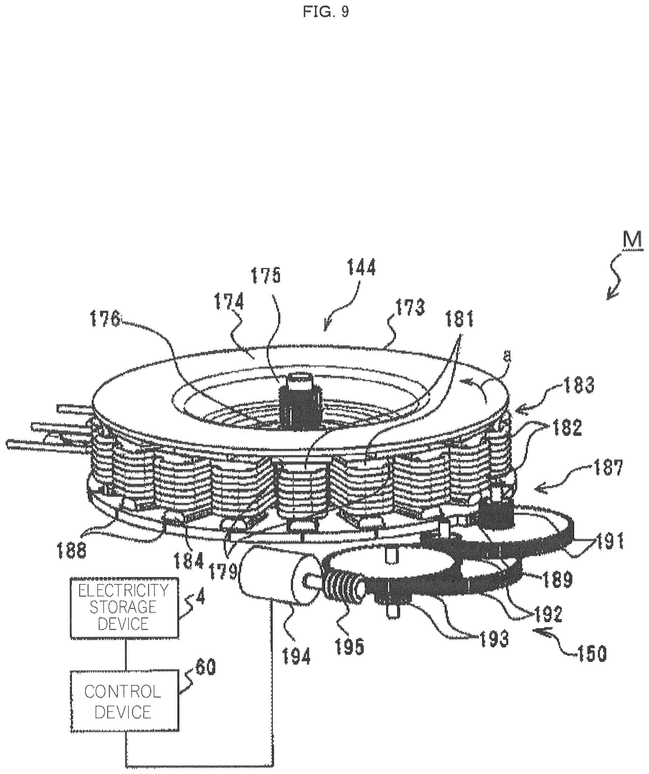

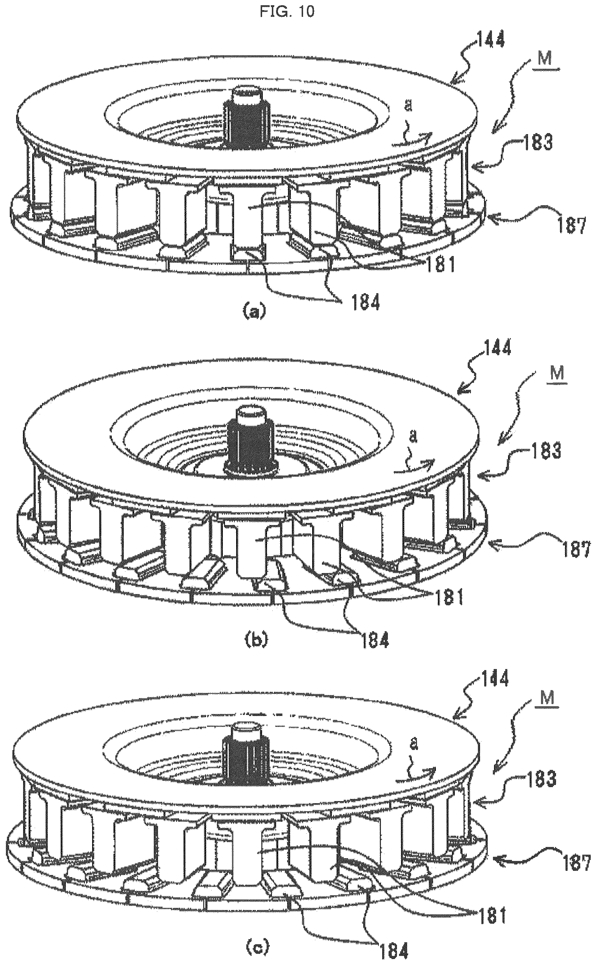

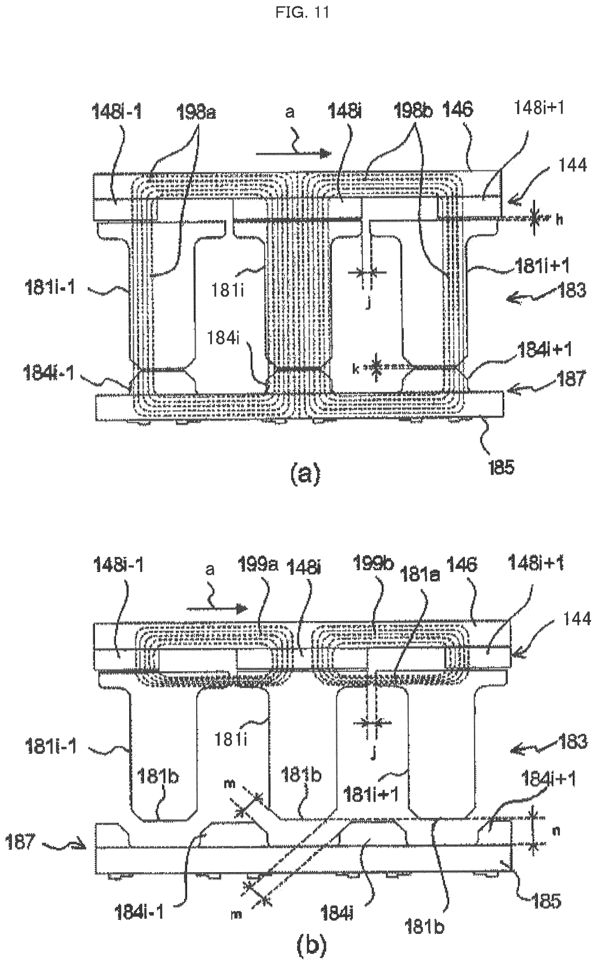

FIG. 8 is an exploded perspective view schematically showing a magnet type motor M included in the straddled vehicle 1 according to the second embodiment. FIG. 9 is a perspective view schematically showing the magnet type motor M shown in FIG. 8. FIG. 10 is a diagram schematically showing action of a stator in the magnet type motor M shown in FIG. 8. FIG. 11 is a diagram showing a principle of a rotation control on the magnet type motor M shown in FIG. 8.

The straddled vehicle 1 according to the second embodiment includes the magnet type motor M different from that of the first embodiment. The magnet type motor M according to the second embodiment includes a stator 142 composed of a first stator 183 and a second stator 187. An adjustment mechanism 150, which will be described later, allows the second stator 187 to rotate about the crankshaft 15 relative to the first stator 183. FIG. 8 is an exploded perspective view of the magnet type motor M having the first stator 183 and the second stator 187 arranged in this manner. FIG. 9 is a perspective view showing a state where the magnet type motor M is assembled as well as the adjustment mechanism 150. FIG. 10 is a diagram showing the rotation angle and action of a reciprocating motion that the second stator 187 undergoes relative to the first stator 183 along the rotation direction of a rotor 144. FIG. 11 is a diagram showing a principle of a rotation control on the magnet type motor M from high-torque/low-speed rotation to low-torque/high-speed rotation.

As shown in FIG. 8, the magnet type motor M includes the rotor 144, and the rotor 144 is configured to rotate in a disk-like fashion about the crankshaft 15. The rotor 144 has a yoke 146 including a ring part 174, a taper part 175, a first cylindrical part 176, a second cylindrical part 178, a ring part 177, and permanent magnets 148. Opposed to the rotor 144 are a plurality of first teeth 181 which are arranged with their first end surfaces 181a facing the rotor 144. Each of the first teeth 181 has peripheral side faces 181c which are different from its first and second end surfaces (181a, 181b) and on which a stator winding 182 is wound. Each of the first teeth 181 mentioned above is formed such that the end surface 181a facing the rotor 144 is wider than the opposite end surface 181b. Accordingly, the interval between adjacent ones of the first teeth 181 is narrow at a location close to the end surface 181a facing the rotor 144, and is wide at a location close to the opposite end surface 181b.

The plurality of first teeth 181 with the stator windings 182 put thereon are molded integrally with the stator windings 182, to constitute the first stator 183 having a ring shape as a whole. A current for producing a torque, which is applied to the stator windings 182 of the first teeth 181 of the first stator 183, is controlled based on a current control according to a basic driving method involving no field-weakening control.

Second teeth 184 are arranged opposed to the end surfaces 181b of the first teeth 181 opposite to the end surfaces 181a facing the rotor 144. The number of second teeth 184 is equal to the number of first teeth 181. The second teeth 184 are arranged with their first end portions 184a facing the end surfaces 181b of the first teeth 181. The second teeth 184 have second end portions 184b that are press-fitted and fixed in a plurality of mounting holes 186 formed in an annular base 185.

The second stator 187 is composed of the second teeth 184 and the base 185 having the mounting holes 186 in which the second teeth 184 are press-fitted and fixed. Preferably, the second teeth 184 and the base 185 are molded, though not shown in the Figure.

FIG. 9 illustrates slits 188 formed in the base 185 of the second stator 187, the slits 188 communicating with and extending from the mounting holes 186. The magnet type motor M has the rotor 144, the first stator 183, and the second stator 187 that are opposed to one another with slight intervals among them and that are arranged one on another along an output shaft direction. The second stator 187 is turnable relative to the first teeth 181 within a predetermined range. The first teeth 181 are disposed so as to face magnets 148. The magnets 179 are provided to the rotator-side yoke 173. Rotation of the second stator 187 will be detailed later.

In the magnet type motor M, as shown in the Figure, gear engagement teeth 189 that is provided to a part of a circumferential side surface of the base 185 included in the second stator 187 are meshed with a small-diameter gear of a third deceleration gear 191 included in the adjustment mechanism 150. The adjustment mechanism 150 includes the third deceleration gear 191, a second deceleration gear 192, a first deceleration gear 193, and an actuator 194. The actuator 194 is not particularly limited, and for example, may be a motor or a solenoid. The third deceleration gear 191 has a large-diameter gear which is meshed with a small-diameter gear of the second deceleration gear 192. The second deceleration gear 192 has a large-diameter gear which is meshed with a small-diameter gear of the first deceleration gear 193. The first deceleration gear 193 has a large-diameter gear which is meshed with a worm gear 195 fixed to the distal end of a rotation shaft of the actuator 194.

The actuator 194, which is connected to the control device 60 capable of receiving electricity supply from the electricity storage device 4, is driven in both forward rotation and reverse rotation. The forward and reverse rotations of the actuator 194 are, by the worm gear 195, converted in a direction orthogonal to the rotation shaft and decelerated, then are transferred to the large-diameter gear of the first deceleration gear 193, then go through the second deceleration gear 192 and the third deceleration gear 191 while being decelerated in three steps in accordance with gear ratios, and then are transferred to the gear engagement teeth 189 of the second stator 187. Accordingly, the second stator 187 is rotatable relative to the first stator 183 to a slight extent in the rotation direction of the rotor 144. Thus, the second stator 187 undergoes stepless reciprocating motion with a narrow rotation angle along the rotation direction of the rotor 144 (the direction indicated by the sign a in the Figure).

Referring to FIG. 10(a), (b), (c), the above-mentioned reciprocating motion that the second stator 187 undergoes relative to the first stator 183 along the rotation direction of the rotor 144 will be described. The stator windings 182, the slits 188, the gear engagement teeth 189, and the adjustment mechanism 150 shown in FIG. 9 are omitted in FIG. 10(a), (b), (c), for clearly illustrating a state of displacement of the second teeth 184 of the second stator 187 relative to the first teeth 181 of the first stator 183.

FIG. 10(a) shows a positional relationship of the second teeth 184 relative to the first teeth 181, the positional relationship corresponding to high-torque/low-speed rotation of the magnet type motor M shown in FIG. 9. In this embodiment, this positional relationship serves as a reference position. The above-described turning of the second stator 187 allows the second teeth 184 to turn (reciprocate) in a direction of the rotor 144 indicated by the arrow a, from the reference position shown in FIG. 10(a) which means a position where the second teeth 184 are opposed to the first teeth 181 to an intermediate position shown in FIG. 10(b), and then to a maximum movement position shown in FIG. 10(c) which means a position where each of the second teeth 184 is located (for example, at the midpoint) between one first tooth 181 and another first tooth 181 adjacent to the one first tooth. The intermediate position shown in FIG. 10(b) represents an optional position that allows stepless and intermittent turning.

Referring to FIG. 11, a principle of the rotation control on the magnet type motor M from high-torque/low-speed rotation to low-torque/high-speed rotation according to this embodiment will be described. In FIG. 11(a), (b), the stator windings 182 wound on the first teeth 181, a mold therefor, and a mold for the second teeth 184 and the base 185 are not shown, for easy understanding.

FIG. 11(a) shows a state under high-torque/low-speed rotation, where the second teeth 184 are positioned opposed to the first teeth 181 as shown in FIG. 10(a). FIG. 11(b) shows a state under low-torque/high-speed rotation, where each of the second teeth 184 is positioned between one first tooth 181 and another first tooth 181 adjacent to the one first tooth 181 as shown in FIG. 10(c). FIG. 11(a) shows a state where the permanent magnets 148 of the rotor 144 are opposed to the first teeth 181 and the second teeth 184 are opposed to the first teeth 181. That is, FIG. 11(a) shows the same state as shown in FIG. 10(a). FIG. 11(b) shows a state where each of the second teeth 184 is positioned between one first tooth 181 and another first tooth 181 adjacent to the one first tooth 181 without any change in the positional relationship between the permanent magnets 148 of the rotor 144 and the first teeth 181. That is, FIG. 11(b) shows the same state as shown in FIG. 10(c).

Referring to FIG. 11(a), the yoke 146 of the rotor 144, the first teeth 181, the second teeth 184, and the base 185 have high magnetic permeabilities. An interval h between surfaces of the permanent magnets 148 and surfaces of the first teeth 181 facing each other and an interval k between surfaces of the first teeth 181 and surfaces of the second teeth 184 facing each other are extremely narrow. Therefore, an in-air magnetic resistance is low. As described above, the end surfaces 181a of the first teeth 181 facing the rotor 144 are wider than the other end surfaces 181b. Thus, an interval j formed between the end surfaces 181a of adjacent first teeth 181 facing the rotor 144 is extremely narrower than a distance between the other end surfaces. The interval j, however, is wider than the interval h from the rotor 144. These intervals have a relationship of "h ≒ k<j". Accordingly, magnetic fluxes produced between a permanent magnet 148i (assumed as N-pole) and a permanent magnet 148i-1 (assumed as S-pole) adjacent to the permanent magnet 148i hardly pass through the interval j, but form a strong flux flow 198a passing through the interval h, a first tooth 181i, the interval k, a second tooth 184i, the base 185, a second tooth 184i-1, the interval k, a first tooth 181i-1, the interval h, and the yoke 146. Also, magnetic fluxes produced between the permanent magnet 148i (N-pole) and another permanent magnet 148i+1 (S-pole) adjacent to the permanent magnet 148i hardly pass through the interval j, but form a strong flux flow 198b passing through the interval h, the first tooth 181i, the interval k, the second tooth 184i, the base 185, a second tooth 184i+1, the interval k, a first tooth 181i+1, the interval h, and the yoke 146. Also when the permanent magnet 148i is not N-pole but is S-pole, the same phenomena occur so that strong flux flows are produced to pass through the corresponding permanent magnets 148, the corresponding first teeth 181, the corresponding second teeth 184, the base 185, and the yoke 146, except that the directions of the flux flows are opposite.

These strong flux flows act as a magnetic resistance which makes it difficult for the magnet type motor M to transition from the high-torque/low-speed rotation to the low-torque/high-speed rotation. In this embodiment, therefore, as illustrated in FIG. 9 and FIG. 10, the second teeth 184 are allowed to rotate (reciprocate) in a rotation direction of the rotor 144 indicated by the arrow a, within a narrow angle range from the reference position where the second teeth 184 are opposed to the first teeth 181 to the position (maximum movement position) where each of the second teeth 184 is located between one first tooth and another first tooth adjacent to the one first tooth.

It is assumed that the second teeth 184 are rotated from the reference position shown in FIG. 11(a) to the maximum movement position shown in FIG. 11(b). Consequently, an interval m appears between a portion of each first tooth 181 and a portion of each second tooth 184 opposed to each other. The interval m is wider than the interval k which appears when the first teeth 181 and the second teeth 184 are opposed to each other. In addition, an interval n appears between each first tooth 181 and the base 185, because the second teeth 184 are arranged so as to project farther than the base 185 does. The interval n is wider than the interval m between the first tooth 181 and the second tooth 184.

These intervals have a relationship of "m<n". Since the interval n is wider than the interval m, the interval n is negligible for the interval m from the viewpoint of a magnetic resistance. In the state shown in FIG. 11(b), when each of the second teeth 184 is moved to a position between one first tooth 181 and another adjacent first tooth 181, it can be considered that the interval m is the shortest distance between each second tooth and the end surface 181b of the corresponding first tooth opposite to the end surface 181a facing the rotor 144.

As described above, the end surfaces 181a of the first teeth 181 facing the rotor 144 are wider than the other end surfaces 181b. Thus, the interval j formed between the end surfaces 181a of adjacent first teeth 181 facing the rotor 144 is extremely narrow. In the state shown in FIG. 11(b), the interval j and the interval m have a relationship of "j<m". That is, the distance (j) between an end surface 181a of one first tooth 181 facing the rotor 144 and an end surface 181a of another first tooth 181 facing the rotor 144 and adjacent to the one first tooth 181 is shorter than the shortest distance (interval m) between each second tooth 184 and the end surface 181b of the corresponding first tooth 181.

By creating this state, that is, by creating a state where the intervals of the respective members have a relationship of "h<j<m<n", as shown in FIG. 11(b), magnetic fluxes produced between one permanent magnet 148i (N-pole) and another adjacent permanent magnet 148i-1 (S-pole) flow from the first tooth 181i neither to the second tooth 184i-1 nor to the base 185 due to flux resistances provided by the interval m and by the interval n, but form a weak flux flow 199a passing through only the first tooth 181i, the interval j, the first tooth 181i-1, and the yoke 146. Also, magnetic fluxes produced between one permanent magnet 148i (N-pole) and another adjacent permanent magnet 148i+1 (S-pole) flow from the first tooth 181i neither to the second tooth 184i+1 nor to the base 185 due to flux resistances provided by the interval m and by the interval n, but form a weak flux flow 199b passing through only the first tooth 181i, the interval j, the first tooth 181i+1, and the yoke 146. Accordingly, the magnetic fluxes from the permanent magnets 148 do not flow across the stator windings 182 (not shown) of the first teeth 181, and therefore a flux resistance in the rotation direction of the rotor 144 which is caused by the magnetic fluxes flowing across the stator windings 182 is suppressed, so that high-speed rotation can be allowed. Likewise, the magnetic fluxes from the permanent magnets 148 hardly flow into coil core portions of the first teeth 181, which results in lowering a torque on the rotor 144 generated between the permanent magnets 148 and the first teeth 181 having the stator windings 182 energized. Consequently, low-torque/high-speed rotation can be allowed.

As thus far described, in this embodiment, the magnet type motor M is able to increase or decrease magnetic fluxes flowing from the permanent magnets 148 of the rotor 144 to the first teeth 181, simply by moving the second stator 187 relative to the first stator 183 in the rotation direction of the rotor 144. In this manner, rotation output characteristics can be changed easily. Accordingly, the magnet type motor M can easily adjust a flux flow from the rotor 144 so as to generate an electricity generation current that corresponds to the amount of electricity stored in the electricity storage device 4 per unit time. It is also possible to generate an electricity generation current greater than the amount of electricity stored in the electricity storage device 4 per unit time, to suppress application of an extra electricity generation load to the engine EG.

The magnet type motor M according to the second embodiment described above can change output performance at a time of driving the wheel 3b. Specifically, in the magnet type motor M according to the second embodiment, at a time of starting rotation of the crankshaft 15, for example, the second teeth 184 and the first teeth 181 are arranged as shown in FIG. 10(a) and FIG. 11(a), so that a high torque can be outputted. In the magnet type motor M according to the second embodiment, after starting rotation of the crankshaft 15, for example, the second teeth 184 and the first teeth 181 are arranged as shown in FIG. 10(c) and FIG. 11(b), so that high-speed rotation can be allowed. Also in a case of the magnet type motor M functioning as a generator, the electricity generation performance can be changed by changing the arrangement of the second teeth 184 and the first teeth 181.

In the vehicle according to the present teaching, as described above, the magnet type motor is preferably configured or controlled such that rotation-speed/torque characteristics are different between when the crankshaft starts rotating and after the crankshaft starts rotating. In this configuration, it is preferable that the rotation-speed/torque characteristics exhibited when the crankshaft starts rotating have a higher torque outputted in a low-speed region, as compared to the rotation-speed/torque characteristics exhibited after the crankshaft starts rotating. The departure-time motoring can be performed more effectively. It is also preferable that the rotation-speed/torque characteristics exhibited after the crankshaft starts rotating allow a higher torque to be outputted in a high-speed region or allow a torque to be outputted in a higher-speed region, as compared to the rotation-speed/torque characteristics exhibited when the crankshaft starts rotating. The deceleration-time motoring and/or the acceleration-time motoring can be performed more effectively. The magnet type motor is also preferably configured or controlled such that the rotation-speed/torque characteristics change during transitions from the drive stop state to the state (C). In this configuration, it is preferable that the rotation-speed/torque characteristics are changed so as to output a higher torque when the crankshaft starts rotating or when the vehicle starts moving forward. The magnet type motor is also preferably configured or controlled such that different rotation-speed/torque characteristics are exhibited between the deceleration-time motoring and the acceleration-time motoring. In this configuration, it is preferable that the rotation-speed/torque characteristics are changed such that a torque outputted in the acceleration-time motoring is higher than a torque outputted in the deceleration-time motoring.

The change in the rotation-speed/torque characteristics is not limited to the one illustrated in the second embodiment, and may be implemented based on a field-weakening control, for example. The change in the rotation-speed/torque characteristics is preferably implemented by changing the arrangement of the stator and/or the rotor as illustrated in the second embodiment. Changing the arrangement of the stator and/or the rotor is not particularly limited, and may be implemented not only by the method illustrated in the second embodiment of the present application but also by, for example, adjusting the length of an air gap between the rotor and the stator. As for a brushed DC motor, examples of a brushed DC motor capable of changing the arrangement of the stator and/or the rotor include a brushed DC motor that is configured to have the position of a permanent magnet changeable in the circumferential direction.

### <Third Embodiment>

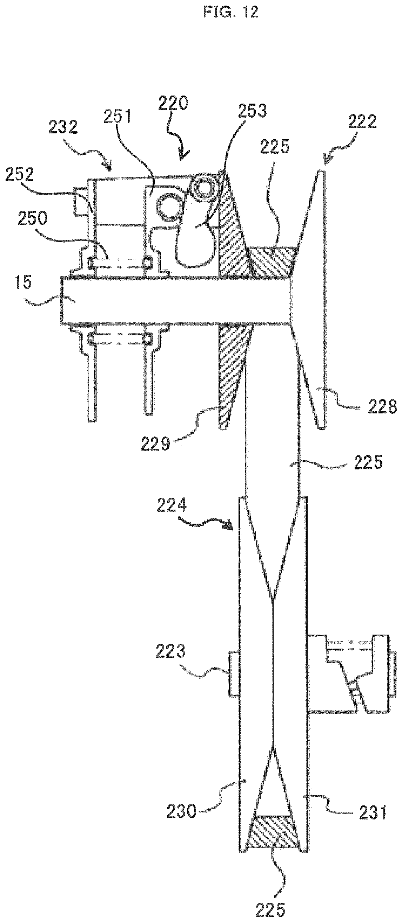

A third embodiment will now be described with reference to FIG. 12 to FIG. 18. Hereinafter, components identical to or corresponding to the components in the first embodiment will be respectively denoted by the same reference signs as in the first embodiment. The first embodiment and the third embodiment are different in the power transmission device PT. A power transmission device PT according to the third embodiment includes a belt clutch 220.

The belt clutch 220 includes a drive pulley 222, a driven pulley 224, a V-belt 225, and a driving-side sheave movement mechanism 232. The V-belt 225 is an example of a belt. The belt is not necessarily limited to the V-belt, and may be a flat belt for example. The driving-side sheave movement mechanism 232 is an example of a sheave movement mechanism.

The drive pulley 222 is disposed to receive power from the crankshaft 15. The drive pulley 222 is fixed around the crankshaft 15 of the engine EG. The driven pulley 224 is disposed so as to transmit power to the wheel 3b (see FIG. 1). The driven pulley 224 is provided around a driven shaft 223. Power received by the driven shaft 223 is transmitted to the wheel 3b. The V-belt 225 is wrapped around the drive pulley 222 and the driven pulley 224. The drive pulley 222 includes an immovable sheave 228 and a movable sheave 229, as shown in FIG. 12. The immovable sheave 228 is provided around the crankshaft 15. The movable sheave 229 is provided so as to be opposed to the immovable sheave 228. The movable sheave 229 is movable in opposite directions along the crankshaft 15. The immovable sheave 228 and the movable sheave 229 have inner surfaces that define a groove. The groove has a V-shaped transverse cross-section, for example.

The driven pulley 224 includes an immovable sheave 230 and a movable sheave 231. The immovable sheave 230 is provided around the driven shaft 223. The movable sheave 231 is provided so as to be opposed to the immovable sheave 230. The movable sheave 231 is movable in opposite directions along the driven shaft 223. The immovable sheave 230 and the movable sheave 231 have inner surfaces that define a groove. The groove has a V-shaped transverse cross-section, for example. Upon starting of the engine EG, the crankshaft 15 as well as the drive pulley 222 are rotated. Since a torque of the drive pulley 222 is transmitted to the driven pulley 224 through the V-belt 225, rotation of the drive pulley 222 causes rotation of the driven pulley 224 and the driven shaft 223.

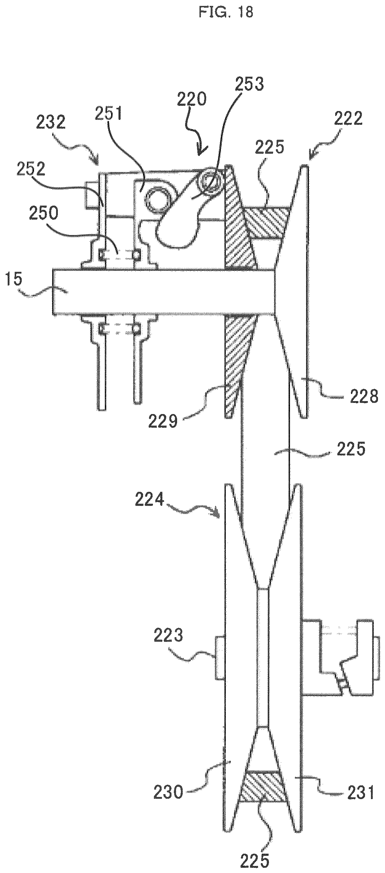

The driving-side sheave movement mechanism 232 moves the movable sheave 229 of the drive pulley 222 along the crankshaft 15. As shown in FIG. 12, the driving-side sheave movement mechanism 232 includes an immovable member 251, a movable member 252, an elastic member 250, and a weight 253. The immovable member 251 is provided to the crankshaft 15 such that the immovable member 251 is rotated together with the crankshaft 15 and is not moved relative to the crankshaft 15 in an axial direction. The movable member 252 is provided to the crankshaft 15 such that the movable member 252 is rotated together with the crankshaft 15 and is movable relative to the crankshaft 15 in the axial direction. The movable member 252 is disposed at an interval from the immovable member 251 in the axial direction. The elastic member 250, which is disposed between the immovable member 251 and the movable member 252, biases the movable member 252 in a direction away from the immovable member 251. The elastic member 250 is a spring, for example. The movable member 252 is coupled to the movable sheave 229 of the drive pulley 222. Thus, the movable sheave 229 is biased in the direction away from the immovable sheave 228. Due to the power received by the crankshaft 15, a centrifugal force occurs in the weight 253, whereby the driving-side sheave movement mechanism 232 pushes and moves the movable sheave 229 in a direction toward the immovable sheave 228. FIG. 12 shows a state where no centrifugal force is occurring. FIG. 18 shows a state where a centrifugal force is occurring.

As a result of the driving-side sheave movement mechanism 232 moving the movable sheave 229 in the above-described manner, the bottom width of the groove defined between the immovable sheave 228 and the movable sheave 229 changes in a range from a first distance to a second distance. Details will be given later. In this embodiment, the driving-side sheave movement mechanism 232 is configured to move only one of the two pulleys; however, the driving-side sheave movement mechanism 232 may be configured to move both of the two pulleys.

The belt clutch 220 includes a driven-side sheave movement mechanism (not shown) for moving the movable sheave 231 of the driven pulley 224 along the driven shaft 223. The movable sheave 231 of the driven pulley 224 is biased in a direction toward the immovable sheave 230. The driven-side sheave movement mechanism pushes and moves the movable sheave 231 in such a direction that a belt tension overcomes a biasing force to move the movable sheave 231 away from the immovable sheave 230.

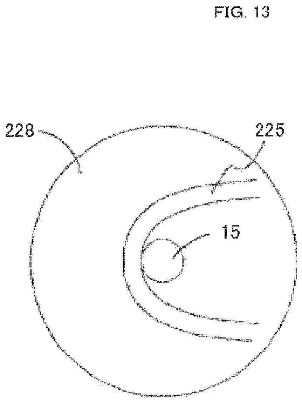

In the drive stop state, as shown in FIG. 12 and FIG. 13, the groove defined between the immovable sheave 228 and the movable sheave 229 has its bottom width equal to the first distance. The first distance is wider than the bottom width of the V-belt 225. The first distance is, for example, a maximum value allowed for the bottom width of the groove. In this condition, the movable sheave 229 is away from the immovable sheave 228 so that a side face of the V-belt 225 is completely separated from the immovable sheave 228 of the drive pulley 222. The V-belt 225 has its bottom surface in contact with the crankshaft 15. The V-belt 225, however, has its opposite side faces separated from the immovable sheave 228 and the movable sheave 229, respectively. In this state, even when the crankshaft 15 is rotated, a torque of the drive pulley 222 is hardly transmitted to the V-belt 225. At this time, the movable sheave 231 of the driven pulley 224 comes closest to the immovable sheave 230, so that the driven pulley 224 has the narrowest groove width. This makes the V-belt 225 farthest from the driven shaft 223, and therefore the V-belt 225 has the largest wrapping diameter.

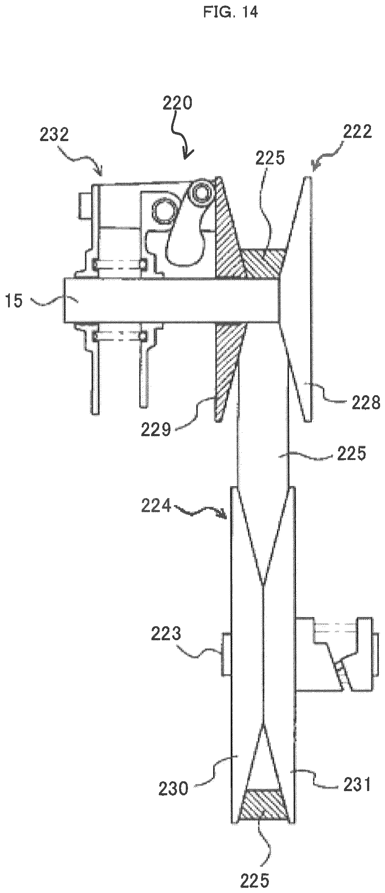

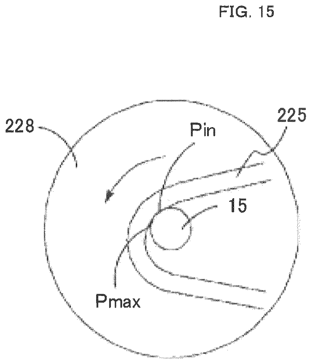

Upon shifting from the drive stop state to the state (A), due to the centrifugal force, the driving-side sheave movement mechanism 232 pushes and moves the movable sheave 229 of the drive pulley 222 to bring the opposite side faces of the V-belt 225 into contact with the immovable sheave 228 and the movable sheave 229, respectively, as shown in FIG. 14 and FIG. 15. At this time, a relative gap between the drive pulley 222 and the V-belt 225 is narrowest not at a position Pmax but at a position Pin. The position Pmax is the position farthest from the driven pulley 224 among positions on a surface of the crankshaft 15. The position Pin is a position slightly shifted from the position Pmax in the direction reverse to the rotation direction of the V-belt 225. At this position Pin, the opposite side faces of the V-belt 225 are in contact with the immovable sheave 228 and the movable sheave 229, respectively, and a torque of the drive pulley 222 starts to be transmitted to the V-belt 225. The bottom width of the groove is equal to the bottom width of the V-belt 225. Consequently, the magnet type motor M makes the straddled vehicle 1 start traveling with the combustion action of the engine EG stopped.

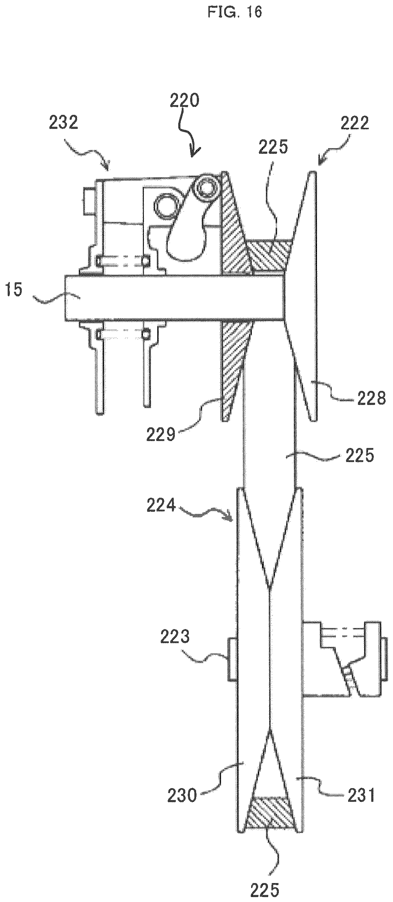

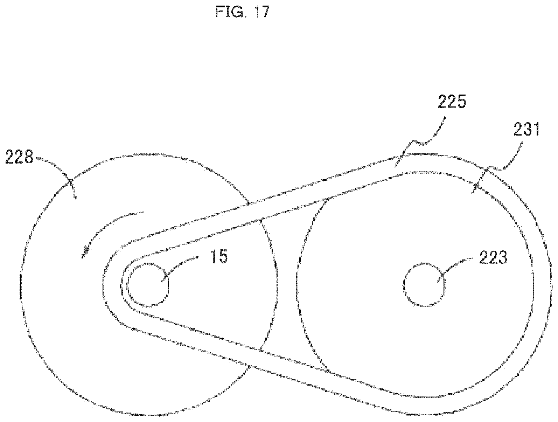

If the straddled vehicle 1 accelerates in the state (A), as shown in FIG. 16 and FIG. 17, the driving-side sheave movement mechanism 232 pushes and moves the movable sheave 229 of the drive pulley 222 farther than the position shown in FIG. 14. This makes the groove width of the drive pulley 222 narrower. As a result, the V-belt 225 is separated from the crankshaft 15, and a torque of the drive pulley 222 is transmitted to the driven pulley 224 through the V-belt 225. At this time, the wrapping diameter on the drive pulley 222 is small, while the wrapping diameter on the driven pulley 224 is large. Accordingly, the driven pulley 224 has a low rotation speed but a high torque. In this condition, the bottom width of the groove is narrower than the bottom width of the V-belt 225.

If the straddled vehicle 1 further accelerates in the state (A), shifting to the state (B) takes place. In the state (B), as shown in FIG. 18, the driving-side sheave movement mechanism 232 pushes and moves the movable sheave 229 of the drive pulley 222 farther than the position shown in FIG. 16, to make the groove width of the drive pulley 222 narrower, so that the V-belt 225 is more distant from the crankshaft 15. Concurrently with this, the driven-side sheave movement mechanism pushes and moves the movable sheave 231 of the driven pulley 224 farther than the position shown in FIG. 16, to make the groove width of the driven pulley 224 wider, so that the V-belt 225 approaches the driven shaft 223. At this time, the bottom width of the groove is narrower than the bottom width of the V-belt 225, and is wider than the second distance. The second distance is, for example, a minimum value allowed for the bottom width of the groove.

While the straddled vehicle 1 is traveling in any of the states (A) to (E), the driving-side sheave movement mechanism 232 moves the movable sheave 229 in the axial direction such that the bottom width of the groove changes within a range equal to or narrower than the bottom width of the V-belt 225 and wider than the second distance. Upon shifting from any of the states (A) to (E) to the drive stop state, the driving-side sheave movement mechanism 232 moves the movable sheave 229 such that the bottom width of the groove becomes wider than the bottom width of the V-belt 225. In the drive stop state, the driving-side sheave movement mechanism 232 moves the movable sheave 229 such that the bottom width of the groove is equal to the first distance. In a state where neither the engine EG nor the magnet type motor M is not operating, the bottom width of the groove is wider than the bottom width of the V-belt 225, and therefore it is relatively easy for the driver to walk while pushing the straddled vehicle 1. The configuration of the driving-side sheave movement mechanism 232 is not limited to the one illustrated in this embodiment, but may be configurations conventionally known.

### Reference Signs List

- 1: straddled vehicle
- 3a, 3b: wheel
- 4: electricity storage device
- 8: accelerator operator
- 60: control device
- EG: engine
- M: magnet type motor

## Claims

1. A vehicle capable of leaning into turns, the vehicle being configured to, when taking a turn, lean toward the inside of a curve in order to oppose a centrifugal force acting on the vehicle at a time of the turn, the vehicle comprising:
an engine (EG) including a crankshaft (15), the engine (EG) being configured to output power through the crankshaft (15);
a magnet type motor (M) including a rotor (30) and a stator (40), the rotor (30) being connected to the crankshaft (15) such that power transmission between the rotor (30) and the crankshaft (15) is allowed without interposition of a clutch and such that the rotor (30) rotates with a fixed speed ratio relative to the crankshaft (15), the stator (40) being arranged opposed to the rotor (30), either one of the rotor (30) or the stator (40) including a permanent magnet, the magnet type motor (M) being configured to rotate the crankshaft (15) at least when starting a combustion action of the engine (EG) and to generate electricity when being driven by the engine (EG);
an electricity storage device (4) configured to supply electricity to the magnet type motor (M);
a driven member (3b) configured to be driven by power outputted from the engine (EG) and/or the magnet type motor (M), to make the vehicle move forward;
an accelerator operator (8) configured to receive a torque request caused by a driver operating the accelerator operator (8); and
a control section (60) configured to control the magnet type motor (M) and the engine (EG) such that, in response to reception of the torque request caused by the driver operating the accelerator operator (8) in a state where the combustion action of the engine (EG) is stopped and the driven member (3b) is not driven, the magnet type motor (M) drives the driven member (3b) by causing the crankshaft (15) to rotate using electricity in the electricity storage device (4) with the combustion action of the engine (EG) stopped, to make the vehicle travel using the magnet type motor (M) before the engine (EG) starts the combustion action at a time of vehicle departure, for the vehicle (1) having a power transmission system configured to support the power transmission between the rotor (30) and the crankshaft (15) being not disconnected,
the control section (60) is further configured to control the magnet type motor (M) and the engine (EG) such that, in response to reception of the torque request caused by the driver additionally or continuously operating the accelerator operator (8) in a state where the magnet type motor (M) drives the driven member (3b) by causing the crankshaft (15) to rotate using electricity in the electricity storage device (4) with the combustion action of the engine (EG) stopped, the control section (60) is configured to supply a fuel to the engine (EG) and starts the combustion action of the engine (EG) so that the driven member (3b) is driven by the engine (EG) as well as the magnet type motor (M), to make the vehicle travel with the rotation of the crankshaft being quickly accelerated by both the magnet type motor and the engine.

2. The vehicle according to claim 1, comprising a power transmission device (PT) for allowing transmission of the power between the crankshaft (15) and the driven member (3b),
the power transmission device (PT) including a belt clutch (220),
the belt clutch (220) including:
a drive pulley (222) disposed so as to receive the power from the crankshaft (15);
a driven pulley (224) disposed so as to transmit the power to the driven member (3b);
a belt (225) wrapped around the drive pulley (222) and the driven pulley (224); and
a sheave movement mechanism (232) configured to move at least one sheave out of two sheaves included in the drive pulley (222) in an axial direction such that a bottom width of a groove defined between the two sheaves changes in a range from a first distance to a second distance, the first distance being wider than a bottom width of the belt (225), the second distance being narrower than the bottom width of the belt (225).

3. The vehicle according to claim 2, wherein
the sheave movement mechanism (232) is configured to move the at least one sheave in the axial direction such that the bottom width of the groove defined between the two sheaves is wider than the bottom width of the belt (225) in a state where the combustion action of the engine (EG) is stopped and the driven member (3b) is not driven.

4. The vehicle according to claim 2 or 3, wherein
the sheave movement mechanism (232) is configured to move the at least one sheave in the axial direction such that the bottom width of the groove defined between the two sheaves is equal to or narrower than the bottom width of the belt (225) when the magnet type motor (M) makes the vehicle start traveling with the combustion action of the engine (EG) stopped.

5. The vehicle according to any one of claims 2 to 4, wherein
the sheave movement mechanism (232) is configured to move the at least one sheave in the axial direction such that the bottom width of the groove defined between the two sheaves is narrower than the bottom width of the belt (225) when the combustion action of the engine (EG) starts.

## Patentansprüche

1. Ein Fahrzeug, das in der Lage ist, sich in Kurven zu lehnen, wobei das Fahrzeug konfiguriert ist, sich beim Fahren einer Kurve in Richtung der Innenseite einer Kurve zu lehnen, um einer zentrifugalen Kraft entgegenzuwirken, die auf das Fahrzeug zu einem Zeitpunkt der Kurve einwirkt, wobei das Fahrzeug folgende Merkmale aufweist:
einen Motor (EG) mit einer Kurbelwelle (15), wobei der Motor (EG) konfiguriert ist, Leistung über die Kurbelwelle (15) auszugeben;
einen Magnettyp-Motor (M), der einen Rotor (30) und einen Stator (40) umfasst, wobei der Rotor (30) derart mit der Kurbelwelle (15) verbunden ist, dass eine Leitungsübertragung zwischen dem Rotor (30) und der Kurbelwelle (15) ohne Zwischenschaltung einer Kupplung ermöglicht wird, und derart, dass der Rotor (30) sich mit einem feststehenden Geschwindigkeitsverhältnis relativ zu der Kurbelwelle (15) dreht, wobei der Stator (40) gegenüber dem Rotor (30) angeordnet ist, wobei entweder der Rotor (30) oder der Stator (40) einen Permanentmagneten umfasst, wobei der Magnettyp-Motor (M) konfiguriert ist, die Kurbelwelle (15) zumindest beim Starten eines Verbrennungsvorgangs des Motors (EG) zu drehen und Elektrizität zu erzeugen, wenn er durch den Motor (EG) angetrieben wird;
eine Elektrizitätsspeichervorrichtung (4), die konfiguriert ist, den Magnettyp-Motor (M) mit Elektrizität zu versorgen;
ein Abtriebsbauglied (3b), das konfiguriert ist, angetrieben zu werden durch eine Leistung, die aus dem Motor (EG) und/oder dem Magnettyp-Motor (M) ausgegeben wird, um das Fahrzeug zu veranlassen, sich vorwärts zu bewegen;
ein Beschleunigungsbetätigungsglied (8), das konfiguriert ist, eine Drehmomentanforderung zu empfangen, die durch einen Fahrer ausgelöst wird, der das Beschleunigungsbetätigungsglied (8) betätigt; und
einen Steuerbereich (60), der konfiguriert ist, den Magnettyp-Motor (M) und den Motor (EG) derart zu steuern, dass ansprechend auf den Empfang der Drehmomentanforderung, die durch den Fahrer ausgelöst wird, der das Beschleunigungsbetätigungsglied (8) in einem Zustand betätigt, bei dem der Verbrennungsvorgang des Motors (EG) angehalten ist und das Abtriebsbauglied (3b) nicht angetrieben ist, der Magnettyp-Motor (M) das Abtriebsbauglied (3b) antreibt durch Veranlassen der Kurbelwelle (15), sich mittels Elektrizität in der Elektrizitätsspeichervorrichtung (4) zu drehen, während der Verbrennungsvorgang des Motors (EG) angehalten ist, um das Fahrzeug zu veranlassen, sich unter Einsatz des Magnettyp-Motors (M) zu bewegen, bevor der Motor (EG) den Verbrennungsvorgang zu einem Zeitpunkt der Fahrzeugabfahrt startet, damit das Fahrzeug (1) mit einem Leistungsübertragungssystem, das konfiguriert ist, die Leistungsübertragung zwischen dem Rotor (30) und der Kurbelwelle (15) zu unterstützen, nicht unterbrochen wird,
der Steuerbereich (60) ferner konfiguriert ist, den Magnettyp-Motor (M) und den Motor (EG) derart zu steuern, dass ansprechend auf den Empfang der Drehmomentanforderung, die durch den Fahrer ausgelöst wird, der zusätzlich oder kontinuierlich das Beschleunigungsbetätigungsglied (8) in einem Zustand betätigt, bei dem der Magnettyp-Motor (M) das Abtriebsbauglied (3b) antreibt durch Veranlassen der Kurbelwelle (15), sich mittels Elektrizität in der Elektrizitätsspeichervorrichtung (4) zu drehen, während der Verbrennungsvorgang des Motors (EG) angehalten ist, der Steuerbereich (60) konfiguriert ist, den Motor (EG) mit einem Kraftstoff zu versorgen, und den Verbrennungsvorgang des Motors (EG) startet, so dass das Abtriebsbauglied (3b) durch den Motor (EG) und den Magnettyp-Motor (M) angetrieben wird, um das Fahrzeug zu veranlassen, sich zu bewegen, während die Rotation der Kurbelwelle sowohl durch den Magnettyp-Motor als auch durch den Motor schnell beschleunigt wird.

2. Das Fahrzeug gemäß Anspruch 1, das eine Leistungsübertragungsvorrichtung (PT) aufweist zum Ermöglichen einer Leistungsübertragung zwischen der Kurbelwelle (15) und dem Abtriebsbauglied (3b),
wobei die Leistungsübertragungsvorrichtung (PT) eine Riemenkupplung (220) umfasst,
wobei die Riemenkupplung (220) folgende Merkmale aufweist:
eine Antriebsscheibe (222), die angeordnet ist, um die Leistung von der Kurbelwelle (15) zu empfangen;
eine Abtriebsscheibe (224), die angeordnet ist, um die Leistung an das Abtriebsbauglied (3b) zu übertragen;
einen Riemen (225), der um die Antriebsscheibe (222) und die Abtriebsscheibe (224) gewickelt ist; und
einen Riemenscheibenbewegungsmechanismus (232), der konfiguriert ist, zumindest eine Riemenscheibe von zwei Riemenscheiben, die in der Antriebsscheibe (222) umfasst sind, in einer axialen Richtung derart zu bewegen, dass eine untere Breite einer Rille, die zwischen den zwei Riemenscheiben definiert ist, sich in einem Bereich von einem ersten Abstand zu einem zweiten Abstand verändert, wobei der erste Abstand breiter ist als eine untere Breite des Riemens (225), wobei der zweite Abstand schmaler ist als die untere Breite des Riemens (225).

3. Das Fahrzeug gemäß Anspruch 2, bei dem
der Riemenscheibenbewegungsmechanismus (232) konfiguriert ist, die zumindest eine Riemenscheibe in der axialen Richtung derart zu bewegen, dass die untere Breite der Rille, die zwischen den zwei Riemenscheiben definiert ist, breiter ist als die untere Breite des Riemens (225) in einem Zustand, bei dem der Verbrennungsvorgang des Motors (EG) angehalten ist und das Abtriebsbauglied (3b) nicht angetrieben ist.

4. Das Fahrzeug gemäß Anspruch 2 oder 3, bei dem
der Riemenscheibenbewegungsmechanismus (232) konfiguriert ist, die zumindest eine Riemenscheibe in der axialen Richtung derart zu bewegen, dass die untere Breite der Rille, die zwischen den zwei Riemenscheiben definiert ist, gleich ist oder schmaler ist als die untere Breite des Riemens (225), wenn der Magnettyp-Motor (M) dafür sorgt, dass das Fahrzeug beginnt sich fortzubewegen, während der Verbrennungsvorgang des Motors (EG) angehalten ist.

5. Das Fahrzeug gemäß einem der Ansprüche 2 bis 4, bei dem
der Riemenscheibenbewegungsmechanismus (232) konfiguriert ist, die zumindest eine Riemenscheibe in der axialen Richtung derart zu bewegen, dass die untere Breite der Rille, die zwischen den zwei Riemenscheiben definiert ist, schmaler ist als die untere Breite des Riemens (225), wenn der Verbrennungsvorgang des Motors (EG) startet.

## Revendications

1. Véhicule à même de s'incliner dans les virages, le véhicule étant configuré pour s'incliner, lorsqu'il prend un virage, vers l'intérieur d'une courbe pour s'opposer à une force centrifuge agissant sur le véhicule au moment du virage, le véhicule comprenant:
un moteur (EG) comportant un vilebrequin (15), le moteur (EG) étant configuré pour sortir de l'énergie à travers le vilebrequin (15);
un moteur de type à aimant (M) comportant un rotor (30) et un stator (40), le rotor (30) étant connecté au vilebrequin (15) de sorte que la transmission d'énergie entre le rotor (30) et le vilebrequin (15) soit permise sans interposition d'un embrayage et de sorte que le rotor (30) tourne selon un rapport de vitesse fixe par rapport au vilebrequin (15), le stator (40) étant disposé opposé au rotor (30), l'un quelconque parmi le rotor (30) ou le stator (40) comportant un aimant permanent, le moteur de type à aimant (M) étant configuré pour faire tourner le vilebrequin (15) au moins lors du démarrage d'une action de combustion du moteur (EG) et pour générer de l'électricité lorsqu'il est entraîné par le moteur (EG);
un dispositif d'accumulation d'électricité (4) configuré pour alimenter de l'électricité vers le moteur de type à aimant (M);
un élément entraîné (3b) configuré pour être entraîné par l'énergie sortie par le moteur (EG) et/ou le moteur de type à aimant (M), pour faire avancer le véhicule;
un actionneur d'accélérateur (8) configuré pour recevoir une demande de couple provoquée par un conducteur actionnant l'actionneur d'accélérateur (8); et
un segment de commande (60) configuré pour commander le moteur de type à aimant (M) et le moteur (EG) de sorte que, en réponse à la réception de la demande de couple provoquée par le conducteur actionnant l'actionneur d'accélérateur (8) dans un état où l'action de combustion du moteur (EG) est arrêtée et l'élément entraîné (3b) n'est pas entraîné, le moteur de type à aimant (M) entraîne l'élément entraîné (3b) en faisant tourner le vilebrequin (15) à l'aide de l'électricité dans le dispositif d'accumulation d'électricité (4) avec l'action de combustion du moteur (EG) arrêtée, pour amener le véhicule à se déplacer à l'aide du moteur de type à aimant (M) avant que le moteur (EG) ne commence l'action de combustion à un moment du départ du véhicule, du fait que le véhicule (1) présente un système de transmission d'énergie configuré pour supporter la transmission d'énergie entre le rotor (30) et le vilebrequin (15) non déconnecté,
le segment de commande (60) est par ailleurs configuré pour commander le moteur de type à aimant (M) et le moteur (EG) de sorte que, en réponse à la réception de la demande de couple provoquée par le conducteur actionnant en outre ou en continu l'actionneur d'accélérateur (8) dans un état dans lequel le moteur de type à aimant (M) entraîne l'élément entraîné (3b) en faisant tourner le vilebrequin (15) à l'aide de l'électricité dans le dispositif d'accumulation d'électricité (4) avec l'action de combustion du moteur (EG) arrêtée, le segment de commande (60) soit configuré pour alimenter un carburant vers le moteur (EG) et commencer l'action de combustion du moteur (EG) de sorte que l'élément entraîné (3b) soit entraîné par le moteur (EG) ainsi que par le moteur de type à aimant (M), pour amener le véhicule à se déplacer avec la rotation du vilebrequin rapidement accélérée par tant le moteur à aimant et le moteur.

2. Véhicule selon la revendication 1, comprenant un dispositif de transmission d'énergie (PT) destiné à permettre la transmission de l'énergie entre le vilebrequin (15) et l'organe entraîné (3b),
le dispositif de transmission d'énergie (PT) comportant un embrayage à courroie (220),
l'embrayage à courroie (220) comportant:
une poulie d'entraînement (222) disposée de manière à recevoir l'énergie du vilebrequin (15);
une poulie entraînée (224) disposée de manière à transmettre l'énergie à l'élément entraîné (3b);
une courroie (225) enroulée autour de la poulie d'entraînement (222) et de la poulie entraînée (224); et
un mécanisme de déplacement de poulie (232) configuré pour déplacer au moins une poulie parmi deux poulies incluses dans la poulie d'entraînement (222) dans une direction axiale de sorte qu'une largeur de fond d'une rainure définie entre les deux poulies change dans une plage allant d'une première distance à une deuxième distance, la première distance étant plus large qu'une largeur de fond de la courroie (225), la deuxième distance étant plus étroite que la largeur de fond de la courroie (225).

3. Véhicule selon la revendication 2, dans lequel
le mécanisme de déplacement de poulie (232) est configuré pour déplacer l'au moins une poulie dans la direction axiale de sorte que la largeur de fond de la rainure définie entre les deux poulies soit plus large que la largeur de fond de la courroie (225) dans un état dans lequel l'action de combustion du moteur (EG) est arrêtée et l'élément entraîné (3b) n'est pas entraîné.

4. Véhicule selon la revendication 2 ou 3, dans lequel
le mécanisme de déplacement de poulie (232) est configuré pour déplacer l'au moins une poulie dans la direction axiale de sorte que la largeur de fond de la rainure définie entre les deux poulies soit égale à ou plus étroite que la largeur de fond de la courroie (225) lorsque le moteur de type à aimant (M) amène le véhicule à commencer à se déplacer avec l'action de combustion du moteur (EG) arrêtée.

5. Véhicule selon l'une quelconque des revendications 2 à 4, dans lequel
le mécanisme de déplacement de poulie (232) est configuré pour déplacer l'au moins une poulie dans la direction axiale de sorte que la largeur de fond de la rainure définie entre les deux poulies soit plus étroite que la largeur de fond de la courroie (225) lorsque l'action de combustion du moteur (EG) commence.
